# EUROPEAN PATENT APPLICATION

(11) **EP 1 643 249 A1**
(43) Date of publication of application: **05.04.2006**
(21) Application number: 04746892.1
(22) Date of filing: 02.07.2004
(51) Int. Cl.: G01N 33/53, G01N 37/00, C12N 15/09, C12M 1/00

(54) **BIO-CHIP**

(30) Priority: 04.07.2003 JP 2003271085; 04.07.2003 JP 2003271084; 29.01.2004 JP 2004021420; 18.05.2004 JP 2004147993
(71) Applicant: Kubota Corporation, Osaka-shi, Osaka, 556-8601 (JP)
(72) Inventor: KURANE, R., KUBOTA CORPORATION, Environm. Eng.Div., Ryugasaki-shi, Ibaraki, 3010852 (JP); TORIYAMA, A., KUBOTA CORPORATION, Hanshin Office, Amagasaki-shi, Hyogo 6618567 (JP); EZAKI, S., KUBOTA CORPORATION, Environm. Eng.Div, Ryugsaki-shi, Ibaraki, 3010852 (JP); KOWADA, H., KUBOTA CORPORATION, Environm. Eng.Div,, Ryusaki -shi, Ibaraki, 3010852 (JP); SHIRAIWA, Y. KUBOTA CORPORATION Environm. Eng.Div., Ryugasaki-shi, Ibaraki 3010852 (JP)
(74) Representative: Kaiser, Magnus
(86) International application number: PCT/JP2004/009423
(87) International publication number: WO 2005/003769

(57) **Abstract**

A biological molecule biochip that supports biological molecules between a first member (1) and a second member (2); in either the first member (1) or the second member (2), by forming a plurality of grooves in parallel in a face that makes contact with the other member, a plurality of spaces are provided that become reaction regions.

## Description

### Technical Field

The present invention relates to biochips used for determining information regarding nucleic acid sequences and analysis of expression, variation, diversity, and the like of genes, as well as refinement and identification of target proteins and functional analysis of protein expression, interaction, posttranslational modification, and the like, and more specifically relates to the shape, microstructure, surface modification, and temperature control of biochips.

### Background Art

Conventionally, in the market of environmental business there is a strong demand to reliably know the movement of microorganisms that are problems in the fields of soil purification and water safety. That is, there are demands to monitor the presence of pathogenic microorganisms that exist in water supply and sewage systems sequentially or in real time, and to quickly and accurately identify and quantify coliform bacteria, intestinal bacteria, and the like, which are water safety standards. Also, in the field of the soil restoration business as well, there are demands for proposals for an accurate restoration method by accurately investigating what kinds of microorganisms are present in object contaminated soil before on-site restoration. Further, there is a demand to precisely know the movement of microorganisms in various fields of environmental business used in bioaugmentation that introduces useful microorganisms, such as investigation of the movement of reference microorganisms and soil diagnosis before and after treatment.

However, under existing circumstances investigation is performed by culture or microscopic observation by an experienced investigator who has brought a sample back to a laboratory, and so it is difficult to perform continuous or real-time on-site monitoring. In recent years, gene-level detection methods have been reported such as identification by analyzing the base sequence of ribosome RNA genes of microorganisms, but these are all tied to laboratory-level investigation and rarely used on-site, and for the most part are not compatible with identification of species under microbial genus. In view of these circumstances, with respect to the identification of species under microbial genus, species-level identification methods have been tested that focus on interspecies gene polymorphism.

Also, along with advancement of gene analysis research, represented by the Genome Project, gene research continues to advance to new stages, and from this point forward research into functional analysis of genes present in the genome will become more and more important. Genes in living organisms are adjusted temporally and spatially, and gene expression monitoring research that comprehensively explains these controlling mechanisms is advancing. Also, the base sequence of the DNA of the human genome varies by person, and in particular, a state in which one base differs is referred to as a single nucleotide polymorphism (SNP), and as that difference is related to a difference in individual pharmaceutical receptivity and susceptibility to disease, analytical research aimed at mapping of genes related to illness, genomic new drugs, and the realization of tailor-made medical treatments is advancing.

At present, due to a shift to the post-genome period with the end of the Human Genome Project, the target of that research is shifting from DNA to protein, and gathering around proteome analysis.

For execution of this sort of genome or proteome analysis of recent years, biochips have been widely introduced in order to comprehensively analyze large quantities of DNA or protein, and they are being used for determining information regarding nucleic acid sequences and analysis of expression, variation, diversity, and the like of genes, as well as refinement and identification of target proteins and functional analysis of protein expression, interaction, posttranslational modification, and the like. As this sort of biochip, DNA chips and protein chips fabricated with microarray technology are known; for example, as DNA chips, DNA microarrays produced by aligning DNA in fixed positions with high density on a substrate of glass or the like are known, and so-called microreactors are known that are micro-fluidic devices in which complicated fluid paths and reaction chambers are formed.

Also, with the increased interest in proteome analysis, protein chips have moved into the spotlight. Although it can be said that there are many cases in which DNA microarray analysis is sufficient because protein information is encoded by DNA, because analysis of the movement of protein that has dissociated from tissue or cells due to secretion or posttranslational modification of protein, such as phosphorylation, which forms the foundation of cellular signal transduction, and glycosylation, which fulfills an important role for molecular recognition and cellular interaction, cannot be predicted from only the base sequence of DNA and the amount of mRNA, the development and practical application of protein chips for analyzing large amounts of protein at a time is much desired.
Below, the shape, microstructure, surface modification, and temperature control of the biochips described above will be described in detail.

### (Biochip Shape)

Microarray technology, with which it is possible to comprehensively analyze a wide variety of genes, is attracting attention in fields from environmental business and medical treatment to basic biology as important fundamental technology of the post-genome period for complete gene expression monitoring, genome variation, and detecting polymorphism. In particular, several large technological advances in DNA microarray technology have been achieved in the past several years. In a DNA microarray, genetic DNA that has been fixedly aligned with high density on a substrate of glass or the like using micro-technology is hybridized with a target nucleic acid labeled with fluorescent molecules, markers bonded on the substrate are made into an image by a fluorescent scanner or the like, and analysis processing is performed.

DNA microarrays are broadly classified according to their production method into photolithography and spotting-type DNA microarrays. A photolithography-type DNA microarray employs a method that combines oligonucleotides on a substrate through the merger of photolithography and combinatorial chemistry. Specifically, bases combined on a substrate are protected by functional groups that are eliminated by light, and after the functional groups have been eliminated by irradiating only the base of a specific region by using a photolithographic mask such that only the reaction site is irradiated, is reacted with a base whose hydroxyl group has been protected, for coupling with a base whose protected group has been eliminated. By repeating this process, hundreds of thousands of types of oligonucleotides are combined on a glass substrate (for example, see Non-patent Document 1 and Patent Document 1). On the other hand, a spotting-type DNA microarray employs a method of producing a high-density DNA microarray by lining up and affixing (spotting) DNA on a substrate with a robot arm. By using a high-speed and high-precision robot spotter, DNA probes prepared in advance are spotted with high density on a substrate coated by a solidifying agent (for example, see Non-patent Document 2 and Patent Document 2). By using probes that have already been prepared, it is possible to make the DNA microarray desired by researchers.

However, DNA microarray technology is still in the stages of development, and there are technological problems to be solved. In their present state, photolithography-type DNA microarrays are expensive due to the time required for design and production, and so their use is limited to only a few research institutions. On the other hand, in spotting-type DNA microarrays, because DNA probes are fixed on a substrate by dropping minute amounts of liquid droplets including DNA probes on the substrate, there is the problem that droplets that have been dropped spread out on the surface of the substrate, interfering with adjacent spots and causing contamination to occur. Further, because it is not possible to preserve the density and uniformity of each spot, spotting-type DNA microarrays are also unsatisfactory with respect to precision and reproducibility. There is also the problem that target DNA is adsorbed nonspecifically on the substrate due to the presence of the solidifying agent affixed around the perimeter of the spot portion, causing an increase in noise and a decrease in the signal-to-noise ratio.

The fluorescence generated when light is irradiated onto the microarray includes fluorescence generated from the substrate itself in addition to the fluorescence generated from the fluorescent markers. Therefore there is the problem that the fluorescence generated from the substrate itself becomes background noise, reducing the signal-to-noise ratio. Also, when detecting fluorescence, ordinarily data is acquired by detecting the fluorescence of each spot using a commercially available microarray scanner, but laser oscillators and optical systems are extraordinarily expensive, and for high-precision detection it is necessary to accurately position the spots in the microscanner. Accordingly, the conventional method cannot be said to be sufficiently satisfactory from the viewpoints of precision, cost, or simplicity of operation.

Accordingly, in view of the actual situation regarding microarray technology as described above, it is preferable in biochips such as DNA microarrays that production and detection can be performed with low cost, and that it is possible to realize simple operation and detection with a high signal-to-noise ratio and good precision.

### (Biochip Microstructure)

Polydimethylsiloxane (below, abbreviated as 'PDMS') is one type of silicon elastomer. PDMS substrate, which is resin base material constituted mainly of PDMS, has extremely high transparency and excellent optical properties, and little absorption in wide wavelength regions. Particularly, absorption in visible light regions is extremely small, and there is almost no effect on the detection of fluorescence.
Also, PDMS has the property of closely adapting to the shape of molds and is easily formed with a desired microstructure. For example, PDMS substrate can be formed in a shape that is ideal for various optical equipment because it can be microfabricated well from the nano to micron order. Further, with the ability to construct microstructures at low cost by using a molding method, it is attracting attention in fields that combine nanotechnology and biotechnology.
Also, PDMS substrate has the quality of good adherence to itself, glass, acrylic resin, or the like, and by putting microfabricated PDMS substrate in contact with a flat piece of glass or an acrylic resin member, it is possible to form fluid channels or chambers.

Capillary gel electrophoresis microchips have been reported in which, by merging nanotechnology and biotechnology using these qualities of PDMS substrate, capillary channels are formed on a microchip formed from PDMS substrate by performing microfabrication on the microchip (for example, see Patent Document 3).

However, although the main component of PDMS substrate is PDMS, polymerization does not occur with only PDMS, and so by the addition of a siloxane compound having a side-chain vinyl group, alkoxy group, or the like at its side chain, crosslinking occurs and a network structure is formed.
Thus, gas permeability is high, and when PDMS is used as the main component of the base material that forms the chamber, there is the problem that water inside the chamber evaporates. Because DNA chips and protein chips have a very small sample as their target, the effect of water evaporation on the reaction system is large, and there is the problem of not being suitable for long-term storage with the sample remaining supported. Particularly, with DNA chips, water evaporation is a large problem in the step in which a reaction is performed at a high temperature, such as in hybridization. Also, water evaporation has a particularly large effect when constructing a protein chip, because the structure and activity of protein can only be preserved under moist conditions.

Also, because PDMS is hydrophobic, color is easily deposited. Thus, it cannot be applied to the detection of visible light by enzyme labeling or the like, and laser light detection is required to be performed. However, although laser light detection is an excellent method with good sensitivity, the cost of detection is high because equipment for detection is expensive.

Accordingly, in view of the actual situation regarding PDMS microchips as described above, it is preferable in biochips such as microarrays to be able to realize lower cost by providing biochips with which it is possible to perform high precision detection because airtightness has been improved, and that are applicable as both DNA chips and protein chips, as well as a method for their production, and by extension, providing a biochip that is also applicable to visible light detection.

### (Biochip Surface Modification)

The above microreactor is produced by applying microfabrication technology for semiconductors or the like (MEMS). For example, in substrate, structures such as a sample injection hole and sample discharge hole, minute capillary-shaped fluid channels, or reaction chambers as reaction regions that connect to these fluid channels, an electrophoretic column, and membrane separating structures are formed. This sort of microreactor is mainly used with the purpose of measuring biological samples, in the manner of a DNA analysis device, microscopic electrophoretic device, microscopic chromatography device, microscopic sensor, or the like.
Conventionally, microreactors are known that include a plurality of individual reaction chambers formed by anisotropic etching on the surface of a silicon substrate and a flat plate (heat-resistant glass) that seals the reaction chambers by being joined to an anode on the surface of the silicon substrate (for example, see patent document 4). By accumulating these microreactors, it is possible to simultaneously perform many biochemical reactions in parallel.

As described above, glass is used as the constituent material of biochips. Although glass has the benefits of being acquired at a low price and having excellent chemical resistance, it has the drawbacks of being difficult to fabricate, and not being suited to uses that employ ultraviolet rays (UV) in a detection system because of the UV absorption of glass.
On the other hand, other than glass, silicon resin is used as a constituent material of biochips, and of this silicon resin, particularly, the PDMS substrate described above is attracting attention from the viewpoints of ease of molding and optical properties.

Here, PDMS, which is the main component of PDMS substrate, only possess inactive functional groups that have poor affinity with biological molecules such as DNA and protein, and so the surface of PDMS substrate is hydrophobic and has inactive surface properties. Thus, it is difficult to immobilize biological molecules and various chemical substances and the like involved in biochemical reactions to the surface of PDMS substrate.

On the other hand, there are many biological molecules that ordinarily are hydrophilic, and the affinity with functional groups such as hydroxyl groups, amino groups, and carboxyl groups is high. Thus, it is conceivable that if the PDMS substrate has these functional groups, for example if the PDMS substrate has the properties of hydrophilicity and high surface activity, it will become easy to immobilize biological molecules on the surface of the substrate, and the biochemical reactions on the microreactors can be reliably performed.

That is, when microreactors are used as the reactors that perform biochemical reactions, it is important that biological molecules and various chemical substances are bonded directly on the substrate surface. Thus, when PDMS is adopted as the main constituent material of the microreactors, it is conceivable to perform modification that improves surface activity by, for example, making the surface of the chambers where reactions are performed hydrophilic such that the affinity between biological molecules and various chemical substances improves.

As this sort of surface property modification, technology is known in which ultraviolet ray (UV) irradiation treatment is performed on the surface of PDMS substrate, or optical ozone oxidation is performed on the surface of PDMS substrate by ultraviolet ray-ozone (UVO) treatment (for example, see non-patent document 3). With this treatment it becomes possible to make the surface of PDMS substrate hydrophilic, because modification of the surface of PDMS substrate is possible such that it has a hydroxyl group or the like.

It also possible for the surface of PDMS substrate to be made hydrophilic due to a hydroxyl group being generated on the surface of PDMS substrate by performing strong alkali treatment on the surface of PDMS substrate, and by performing oxygen radical irradiation treatment on the surface of PDMS substrate using a plasma irradiation apparatus or the like.

In this sort of property modification of the surface of PDMS substrate, when UV irradiation treatment and UVO treatment are performed on the surface of PDMS substrate, or strong alkali treatment, and there is the problem that cracks occur in the surface of PDMS substrate and it becomes cloudy, and transparency is markedly impaired. It is conceivable that this is caused by the PDMS molecular chain being destroyed due to exposure of the surface of PDMS substrate to ultraviolet rays.
When microreactors are used as a DNA analysis device, after the biochemical reaction on the microreactor, DNA labeled with pigment or fluorescence may be detected. At this time, if transparency of the microreactors is impaired, detection of fluorescence with a scanner becomes difficult and it is not possible to perform accurate DNA analysis.

Also, there is the problem that when oxygen radical irradiation treatment is performed on the surface of PDMS substrate, the generated hydroxyl groups can not be stabilized, and only temporary surface modification occurs. Also, because an extremely expensive plasma irradiation apparatus or the like is used, there is the problem that production cost becomes high. High production cost is an obstacle to allowing PDMS to come into widespread use as a constituent material of microreactors.

Accordingly, in view of the actual situation regarding microreactors as described above, it is preferable in biochips such as microreactors that excellent transparency is preserved even after activation of the surface of the substrate, and that there is a method of modifying the surface of silicon resin with which it is possible to produce biochips with excellent cost performance.

### (Biochip Temperature Control)

In order to control the temperature of a target material (temperature control target material) by heating or cooling, it is known to use a Peltier element, which has the Peltier effect.

The Peltier effect is a phenomenon in which when electrical current is passed through touching faces of different types of conductors, a quantity of heat is emitted or absorbed. A member that gives rise to a heating or cooling effect using this Peltier effect is called a Peltier element. In the Peltier element, when the direction of current is changed, the heat-emitting face and the heat-absorbing face are reversed. The basic structure of a Peltier element ordinarily has a shape in which a thermoelectric semiconductor chip is sandwiched between electrodes.

On a DNA chip, which is one type of the biochips described above (for example, microreactors provided with a sample injection hole, sample discharge hole, fluid channel, reaction chamber, and the like) reactions such as DNA fragment amplification and hybridization can be performed.
When performing these reactions on a DNA chip, it is necessary to control the temperature of the DNA chip. As a temperature control apparatus that controls the temperature of the DNA chip, DNA fragment amplification devices using the Peltier element described above are known (for example, see Patent Document 5).

This DNA fragment amplification apparatus is configured by disposing, in order, a heat transfer block on which a DNA chip that is the target of temperature control is placed, a Peltier element, and a heat sink that is a heat dissipating means.
With this sort of configuration, it is possible to effectively control the temperature of the DNA chip with the Peltier element via the heat transfer block.

When the difference between the temperature of the object of temperature control (current temperature) at a certain point in time and the target temperature is a certain size, for example, such as when the temperature is raised from room temperature (current temperature) to 94 °C (target temperature), there is the inconvenience that it takes time to allow the object of temperature control to reach the target temperature.

Here, without limiting to the DNA fragment amplification apparatus, it is preferable that it is possible to swiftly perform a process that raises or lowers the temperature of the object of temperature control, because the time for treating the object of temperature control can be shortened.

Also, when the DNA chip is heated when performing DNA amplification, because reaction fluid including sample DNA evaporates from the sample injection hole and sample discharge hole, there is the problem that reliable execution of the testing process is difficult.

Accordingly, in view of the actual situation regarding PDMS microchips as described above, in biochips such as microarrays it is preferable that a desired temperature can be quickly reached, and that reactions are performed by a biochip reaction temperature controller that can prevent evaporation of reaction fluid.

Patent Document 1: U.S. Patent No. 5,744,305
Patent Document 2: U.S. Patent No. 5,807,522
Patent Document 3: JP 2001-157855A
Patent Document 4: JP H10-337173A
Patent Document 5: JP 2002-306154A
   Non-patent Document 1: Foder SP, Rava RP, Huang XC, Pease AC, Holmes CP, Adams CL: Multiplexed biochemical assays with biological chips, 1993, Nature, No. 364, p. 555-556.
   Non-patent Document 2: Shena, M., Shalon, D., Davis, R.W., and Brown, P.O., Quantitative monitoring of gene expression patterns with a complementary DNA microarray, 1995, Science, No. 270, p. 467-470.
   Non-patent Document 3: K.Efimenko, William E.Wallace, J.Genzer, "Surface Modification of Sylgard-184 Poly(dimethyl siloxane) Networks by Ultraviolet and Ultraviolet/Ozone Treatment", Journal of Colloid and Interface Science 254, 306-315 (2002).

### Disclosure of Invention

### Problem to be Solved by the Invention

From the above, it is a first object of the present invention to provide a biochip in which, with respect to the shape of the biochip, production and detection can be performed with low cost, and with which it is possible to realize simple operation and detection with a high signal-to-noise ratio and good precision.
Also, it is a second object of the present invention to provide a biochip in which, with respect to the microstructure of the biochip, airtightness has been improved and it is possible to perform high precision detection, and that is applicable as both a DNA chip and as a protein chip, and to provide a method for its production, and by extension, to realize lower cost by providing a biochip that is also applicable to visible light detection.
Also, it is a third object of the present invention to provide, with respect to surface modification of the biochip, a silicon resin surface modification method that can produce a biochip with excellent cost performance by preserving excellent transparency even after activation of the surface of substrate.
Further, it is a fourth object of the present invention to provide, with respect to temperature control of the biochip, a biochip reaction temperature controller with which a desired temperature can be quickly reached, and that can prevent evaporation of reaction fluid.

### Means for Solving Problem

### [1] Biochip Shape

A configuration of the "biochip shape" according to the present invention is disclosed below.

A characteristic configuration of the present invention is a biological molecule biochip that supports biological molecules between a first member and a second member, in which
in either the first member or the second member, by forming a plurality of grooves in parallel in a face that makes contact with the other member, a plurality of spaces are provided that become reaction regions.

The inventors of the present invention, in order to attain the objects stated above, as a result of diligent investigation, found out that by disposing a plurality of reaction regions in parallel that support a sample as linear spaces using microfabrication technology, it is possible to realize high-precision detection in which interference between samples is prevented, and that it is possible to read data simply and with high-precision using an inexpensive line sensor. Further, they found out that by turning attention to polydimethylsiloxane as a microfabricated member, it was possible to achieve even lower cost, and simple and high-precision detection. The inventors arrived at completion of the present invention based on this knowledge.

That is, the present invention is related to a biological molecule biochip provided with a plurality of parallel spaces that become linear reaction regions, that detects a target substance selectively captured by biological molecules by supporting biological molecules in the spaces.

Accordingly, with this configuration, because a sample is flowed into reaction regions dividedly formed by a plurality of linear spaces formed in one of either the first member or the second member, interference from an adjacent region can be prevented, it is possible to prevent non-specific adsorption of target DNA onto the substrate, and noise can be diminished, and therefore high-precision detection becomes possible.

Also, a characteristic configuration of the present invention is a biological molecule biochip that supports biological molecules between a first member and a second member, in which
by forming a plurality of grooves in parallel in faces of the first member and the second member where the two members contact each other, a plurality of spaces are provided that become reaction regions.

With this configuration, because a sample is flowed into reaction regions dividedly formed by a plurality of linear spaces formed in faces of the first member and the second member where the two members contact each other, interference from an adjacent reaction region can be prevented, it is possible to prevent non-specific adsorption of target DNA onto the substrate, noise can be diminished, and therefore high-precision detection becomes possible.

Also, a characteristic configuration of the present invention is a biological molecule biochip that supports biological molecules between a first member and a second member, in which
in the first member, a plurality of linear convex portions are formed in parallel in a face that contacts the second member, and in the second member, a plurality of linear groove portions are formed in parallel in a face that contacts the first member that can fit together one-to-one with the linear convex portions, and
while the linear convex portions and the linear groove portions are fitted together, when the first member and the second member are made to contact each other, spaces that become reaction regions are formed between the linear convex portions and the linear groove portions.

With this configuration, because a sample is flowed into reaction regions dividedly formed by linear spaces formed by fitting together the linear convex portions of the first member and the linear groove portions of the second member, interference from an adjacent reaction region can be prevented, it is possible to prevent non-specific adsorption of target DNA onto the substrate, noise can be diminished, and therefore high-precision detection becomes possible.
Moreover, in the substrate surface, by providing different elevations between the reaction regions and the regions outside the reaction regions, it becomes possible to decrease the amount of background fluorescence and the like, and the signal-to-noise value can be improved.

Also, in a characteristic configuration of the present invention, a sample supply opening that supplies a sample to the reaction regions and a sample recovery opening that recovers the sample from the reaction region are provided, making possible communication between the reaction regions and the outside.

With this configuration, it is possible to easily supply a sample with a suitable sample supply means, and to easily recover the sample with a suitable sample recovery means or the like.

Also, in a characteristic configuration of the present invention, the substrate that constitutes at least either one of the first member and the second member is transparent silicon rubber or plastic resin such as polydimethylsiloxane (PDMS) or poly methyl methacrylate (PMMA).

With this configuration, by using PDMS, PMMA, or the like, which have excellent optical properties and ease of formation, as the material that constitutes the substrate, a low background can be achieved and detection with a high signal-to-noise ratio becomes possible, and also, because ease of formation is also excellent, fabrication on the nano or micro order becomes easy, production in a shape that is preferable for various types of optical equipment is possible, and by adopting a molding method using a mold, production in large quantities is made possible and a further cost reduction effect can be anticipated.

Also, a characteristic configuration of the present invention is a biological molecule biochip that supports biological molecules, having a biochip main body in which a plurality of linear reaction regions are provided in parallel.

With this configuration, because a sample is flowed into reaction regions dividedly formed by linear spaces, interference from an adjacent reaction region can be prevented, it is possible to prevent non-specific adsorption of target DNA onto a substrate, noise can be diminished, and therefore high-precision detection becomes possible.

Also, in a characteristic configuration of the present invention, the substrate that constitutes the biochip main body is transparent silicon rubber or plastic resin such as polydimethylsiloxane (PDMS) or poly methyl methacrylate (PMMA).

With this configuration, by using PDMS, PMMA, or the like, which have excellent optical properties and ease of formation, as the material that constitutes the substrate, a low background can be achieved and detection with a high signal-to-noise ratio becomes possible, and also, because ease of formation is also excellent, fabrication on the nano or micro order becomes easy, production in a shape that is preferable for various types of optical equipment is possible, and by adopting a molding method using a mold, production in large quantities is made possible and a further cost reduction effect can be anticipated.

Here, the term "biological molecule biochip" in the present specification means a biochip in which biological molecules are to be supported, or actually were supported, and is a concept that also includes a biochip wherein biological molecules are not actually supported.
The term "biological molecules" means probe molecules that can recognize a test subject, that is, that have a molecule recognition ability in which one of substances that have affinity with each other can be selectively detected, and are immobilized on a member surface in which a reaction region is formed. Accordingly, the term "biological molecules" is a concept that includes any substance as long as the substance has a molecule recognition ability in which one of substances that have affinity with each other can be specifically detected, and is immobilized on a substrate. DNA fragments such as cDNA and PCR products, nucleic acids such as oligonucleotides, polynucleotides, and peptide nucleic acids, proteins, peptides, sugars, cells, microorganisms, and the like are given as preferable examples, but biological molecules are not limited to these.
Commercially available products can be used for a biological substance, which can be obtained using a means of suitable extraction from cells or tissue and purification, or can be artificially synthesized. When nucleic acid is used as a biological substance, it is possible to use DNA or RNA extracted from cells or tissue using a well known method. Further, it is possible to use chain or ring-shaped plasmid DNA or chromosome DNA, DNA fragments in which these have been cleaved chemically or by a restriction enzyme, DNA synthesized by enzymes or the like in vitro, chemically synthesized oligonucleotides, or the like. In the case of protein or peptides, it is possible to use protein extracted from cells or tissue and purified, peptide fragments in which protein has been cleaved chemically or enzymatically by protease or the like, or proteins, antibodies, enzymes or the like synthesized using genetic recombination technology. Here, the substance recognition ability means being able to specifically recognize substances that have affinity with each other. Given by as preferable examples are a hybridization function (complimentary bonding) between bases of DNA-DNA, DNA-RNA, and RNA-RNA, a biological response ability between antibodies and antibody fragments-antigens, a biological response ability between regulators, receptors-hormones, cytokines, neurotransmitters, and lectines, and a biological response ability between enzyme-substrate and coenzymes. Accordingly, the microarray of the present invention can be configured as a DNA chip, protein chip, sugar chain chip, virus chip, microorganism chip, cell chip, or the like, and it can preferably be used for determining information regarding nucleic acid sequences and analysis of expression, variation, diversity, and the like of genes, as well as refinement and identification of target proteins and functional analysis of protein expression, interaction, posttranslational modification, and the like.

Also, the target substance is a substance captured by a biological substance, that is, a biological substance supported by a member and a substance that interacts with affinity that can be specifically recognized, as previously indicated. DNA fragments such as cDNA and PCR products, nucleic acids such as oligonucleotides, polynucleotides, and peptide nucleic acids, proteins, peptides, sugars, cells, microorganisms, and the like are given as preferable examples, but the biological substances are not limited to these.

The concept of test samples used with biochips includes any sample in which there is a suspicion as to the presence of a target substance present in an environment or living body. Environmental samples such as soil and water, biological samples, food samples, and the like can be given as examples. These are preferably pretreated, and preferably labeled with a suitable marker. For example, when the target substance is a nucleic acid, it is preferable that cells or tissue of a microorganism, animal, or plant are extracted from the sample, then purified or isolated, and a nucleic acid sample is prepared by a suitable means from the obtained cells or tissue. Preparation from cells or tissue is performed based on an ordinary nucleic acid preparation method. In the case of mRNA, it is preferable to produce labeled cDNA by a reverse transcription reaction under the presence of labeled dNTP. In the case of prokaryotic cells, it is preferable to extract total RNA, or when investigating gene variation or polymorphism, to amplify the target region with PCR under the presence of a labeled primer or dNTP. Further, when the DNA fragments on the substrate are oligonucleotides it is preferable that the target nucleic acid is made a low-molecular substance.

### [2] Biochip Microstructure

A configuration of the "biochip microstructure" according to the present invention is disclosed below.

A characteristic configuration of the present invention is a biological molecule biochip provided with a reaction region that supports biological molecules between a first member and a second member that are put in contact, wherein at least one of either the first member or the second member is comprised of polydimethylsiloxane (PDMS), and gas molecules are made to penetrate into the PDMS substrate.

The inventors of the present invention, as a result of diligent investigation with respect to preferable usage as a PDMS biochip substrate having excellent optical properties and excellent properties as a microfabricated material, found out that by making gas molecules penetrate into gaps in the mesh structure of PDMS substrate by putting it in contact with gas under vacuum conditions, it is possible to keep gas molecules inside the substrate even under atmospheric pressure, and the gas permeability of PDMS substrate itself can be modified. Based on this knowledge, the inventors arrived at completion of the present invention.

Accordingly, with this configuration, because it is possible to make the biochip such that it is possible to preserve the moisture inside microchambers that become reaction regions, high precision and highly reproducible detection is possible, and long-term preservation is possible. That is, long-term preservation in a liquid phase state is possible, not only DNA but also biological components such as protein and the like can be freely made compatible with biochips, and the scope of application of such biochips is far-reaching. Particularly, because it becomes possible to preserve the activity and structure of protein, which is difficult to handle, use of the present invention as a protein chip is anticipated, and the present invention makes a large contribution to the development of proteome technology.

Also, in a characteristic configuration of the present invention, coating is performed on the surface of the member constituted from polydimethylsiloxane.

With this configuration, gas cutoff of PDMS substrate is further increased, and so the airtightness of reaction spaces formed by being partially or entirely surrounded by PDMS substrate is further increased.

Also, in a characteristic configuration of the present invention, the coating is a gas impermeable polymer.

With this configuration, because it is possible with an impermeable polymer to reliably prevent gas molecules that have been accumulated inside the PDMS substrate from dissipating from the PDMS substrate, gas cutoff of the PDMS substrate is further increased, and the airtightness of the formed reaction spaces surrounded partly or entirely by PDMS substrate is further increased.

Also, a characteristic configuration of the present invention is a method for producing a biological molecule biochip in which at least one of either a first member or a second member that are put in contact with each other is comprised of polydimethylsiloxane, and molecules are supported in a reaction region formed between the first member and the second member, the method comprising a step of maintaining the member comprised of polydimethylsiloxane under vacuum conditions, and a step of making molecules of a predetermined gas penetrate into the polydimethylsiloxane substrate by supplying the gas into the vacuum atmosphere.

With this configuration, it is possible to produce a biochip in which it is possible to preserve the moisture inside microchambers that become reaction regions, high precision and highly reproducible detection is possible, and long-term preservation is possible. That is, long-term preservation in a liquid phase is possible, not only DNA but also biological components such as protein and the like can be freely made compatible with biochips, and the scope of application of such biochips is far-reaching. Particularly, because it becomes possible to preserve the activity and structure of protein, which is difficult to handle, use of the present invention as a protein chip is anticipated, and the present invention makes a large contribution to the development of proteome technology.

### [3] Biochip Surface Modification

A configuration of the "biochip surface modification" according to the present invention is disclosed below.

A characteristic configuration of the present invention is a silicon resin surface modification method in which, after performing an ozone contact process in which ozone is made to contact the surface of a silicon resin, a reducing agent contact process is performed in which a reducing agent is made to contact the surface of the silicon resin.

With this configuration, when ozone has been made to contact the surface of the silicon resin, ozonides are formed by ozone that has acted on the surface of the silicon resin, which has particularly unsaturated bonds, without breaking the molecule chain. By not breaking the molecule chain, because there is no clouding caused by the occurrence of cracks in the surface of the silicon resin, the transparency of the resin is maintained.
Then, a reducing agent is made to contact the surface of the silicon resin in which ozonides are formed in this manner. Thus, unstable ozonides are effectively converted to stable hydroxyl or carboxyl groups, and as a result, and modification to make the surface of the silicon resin hydrophilic can be performed. By making the surface of the silicon resin hydrophilic in this manner, and afterward performing treatment to bond a coupling agent such as amino silane or poly-L-lysine, it is possible to greatly increase the affinity of the silicon resin with biological molecules and various chemical substances. Thus, if modification to make the silicon resin hydrophilic becomes possible, modification to silicon resin with high surface activity can be easily performed.
Accordingly, biological molecules and various chemical substances become easily immobilized on the surface of the silicon resin, and biochemical reactions can be more reliably performed on the silicon resin.
Also, with the present configuration it is not necessary to use an expensive plasma irradiation apparatus or the like, and so it is possible to provide a biochip with excellent cost-performance.

Also, in a characteristic configuration of the present invention, after performing the reducing agent contact process, a surface function modification agent contact process is performed in which a surface function modification agent is made to contact the surface of the silicon resin.

With the present configuration, when reacting hydroxyl or carboxyl groups generated on the surface of the silicon resin with, for example, an amino group-containing surface function modification agent, it is possible to introduce various functional groups such as amino groups to the surface of the silicon resin. Thus, by using various surface function modification agents, silicon resin can be produced that has affinity with many types of biological molecules and various chemical substances. Accordingly, it is possible to provide constituent material for a biochip with a wide range of applications.

Also, in a characteristic configuration of the present invention, the silicon resin has polydimethylsiloxane (PDMS) as a main component.

With the present configuration, as the silicon resin, it is possible to suitably use PDMS, which has excellent physical properties such as transparency, optical properties, adaptability to molds, ease of fabrication, and adherence. PDMS can be cheaply obtained, and the labor necessary for fabrication can be reduced. Thus, a biochip with excellent cost performance or the like can be manufactured, and because it becomes easy to construct a disposable system, problems with respect to contamination are not likely to occur.

Also, in a characteristic configuration of the present invention, the reducing agent is hydrogen peroxide.

With the present configuration, because hydrogen peroxide can be used as a reducing agent that is easy to obtain and to handle, it is easy to make the surface of the silicon resin hydrophilic.

Also, in a characteristic configuration of the present invention, the surface function modification agent is a silane coupling agent.

With the present configuration, because a silane coupling agent can be used as a surface function modification agent that is easy to obtain and to handle, it is easy to give functional groups that have high affinity with biological molecules such as amino and phenyl groups to the surface of the silicon resin.

Also, in a characteristic configuration of the present invention, in the ozone contact process, the resin surface is treated with ozone for one to three hours at 0.8 g/h or more.

As also stated in a below example, by performing the ozone contact process under the conditions of the present configuration, a result is obtained of maintaining the transparency of silicon resin (PDMS) even after surface activation treatment. Accordingly, with the present configuration, because it is possible to perform the ozone contact process in a short amount of time, this becomes a silicon resin surface modification method that is excellent from the viewpoints of cost-performance and efficiency.

### [4] Biochip Temperature Control

A configuration of the "biochip temperature control" according to the present invention is disclosed below.

A characteristic configuration of the present invention is a biochip reaction temperature controller provided with a temperature control portion that controls the temperature of a biochip provided with a fluid channel and a reaction region connected to the fluid channel, wherein
the temperature control portion is provided with a heat transfer block on which the biochip is placed, a Peltier element that makes contact with the heat transfer block, and a heating / heat adsorbing means that makes contact with the Peltier element, disposed in order.

Here, the heating / heat adsorbing means can be configured so that it is possible to heat the Peltier element, which is its target, or to adsorb heat from the Peltier element.

Ordinarily, in the Peltier element, a p-type semiconductor and an n-type semiconductor are thermally arranged in parallel, and by connecting them in series electrically and applying electricity, a heat releasing face and a heat absorbing face are created. Thus, it is possible to configure the heat transfer block that makes contact with the Peltier element such that it is heated by normal driving of the Peltier element, or cooled by reverse driving of the Peltier element.

At this time, when normally driving the Peltier element, because the side of the Peltier element that releases heat and the heat transfer block make contact, it is possible to heat the biochip via the heat transfer block. Further, with the present configuration, because the heating /heat absorbing means, which makes contact with the Peltier element, can be configured such that it heats the Peltier element, it is possible to quickly raise the temperature of the Peltier element.

That is, by heating the Peltier element with the heating /heat absorbing means, the difference between the temperature of the Peltier element and the desired temperature of the biochip can be reduced more quickly that in the case of the Peltier element alone. Thus, the heating efficiency when heating the biochip is improved.

When the Peltier element is driven in reverse, because the side of the Peltier element that absorbs heat and the heat transfer block make contact, it is possible to cool the biochip via the heat transfer block. At this time, with the present configuration, the heating / heat absorbing means, which makes contact with the Peltier element, can be configured such that it adsorbs heat from the Peltier element. As a result, it is possible to quickly lower the temperature of the Peltier element.

Accordingly, with the present configuration, it is possible to control the temperature of the biochip more quickly than in the case of the Peltier element alone. As a result, it is possible to drastically reduce the treatment time of various processes.

Also, in a characteristic configuration of the present invention, a heater is provided that makes contact with the heating / heat adsorbing means.

With this configuration, because a heater is provided that makes contact with the heating / heat adsorbing means, it is possible to easily control the temperature of the heating / heat adsorbing means with the heater.

Also, a characteristic configuration of the present invention is a biochip reaction temperature controller provided with a temperature control portion that controls the temperature of a biochip provided with a reaction region, in which
when the biochip is configured with an injection hole in which a reaction fluid is injected, a reaction region in which the reaction fluid is reacted, a discharge hole that discharges the reaction fluid, a first fluid channel that allows communication between the injection hole and the reaction region, and a second fluid channel that allows communication between the reaction region and the discharge hole, provided on a substrate,
by providing a plurality of temperature control portions, a region that includes at least part of the first fluid channel and part of the second fluid channel is configured so as to be able to cool, and a region that includes at least the reaction region is configured so as to be able to heat or cool.

When adopting this sort of configuration, it becomes possible to heat or cool the reaction region with at least one temperature control portion, and in the reaction region, it is possible to respectively set the temperatures at which, for example, hybridization and subsequent cleaning are executed.
Because a region that includes part of the first fluid channel and part of the second fluid channel can be cooled by at least one temperature control portion, water vapor generated from the reaction fluid due to heating the reaction region is likely to condense in the first fluid channel or the second fluid channel. Thus, reaction fluid present in the reaction region is not likely to dissipate by evaporating outside the biochip.

Accordingly, with the present configuration, in testing on a biochip that handles very small amounts of a sample such as a reagent, because it is possible to avoid dissipation of the sample due to evaporation, the testing process can be reliably conducted.

### Best Mode for Carrying Out the Invention

Following is a detailed description of embodiments of the present invention with reference to the accompanying drawings. However, the present invention is not limited to the example embodiments given below, and can be understood to also include suitable modifications.

### [Embodiment 1]

The present embodiment relates to the shape of the biochip, and describes a biochip in which, using microfabrication technology, by disposing a plurality of reaction regions that support a sample in parallel as linear spaces, it is possible to realize high-precision detection in which interference between samples is prevented. Below, from the shape in which the spaces that become reaction regions are disposed, a biochip with this configuration is called a barcode array.

### <Embodiment 1-1>

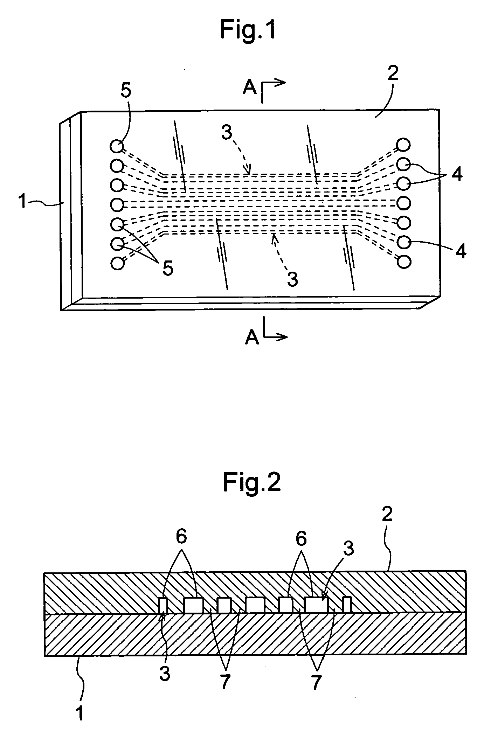

FIG. 1 is a schematic view that shows the basic configuration of the present invention, and is a top view of the barcode array of the present invention. FIG. 2 is a cross-section taken along line A-A in FIG. 1, and schematically shows the barcode array of the present invention when it has been configured as Embodiment 1-1. Below, the top side in FIG. 2 is referred to as the "top", and the bottom side is referred to as the "bottom".

As shown in FIGS. 1 and 2, the barcode array of the present invention is configured from a first member 1 and a second member 2 fixedly disposed on the top face of the first member 1, and spaces that become reaction regions 3 disposed in a barcode shape are provided between the first member 1 and the second member 2.

The first member 1 is configured as a flat plate-shaped body. Surface treatment is performed on flat plate-shaped substrate of the second member 2, and a plurality of grooves 6 that extend in one direction are formed in parallel in a barcode shape on the contact surface of the first member 1 and the second member 2. That is, the second member 2 has a space structure in which a plurality of liner grooves 6 alternate with dividing walls 7 that partition the grooves 6. It is preferable that the grooves 6 are disposed approximately parallel to each other. Also, in FIG. 2, the cross-sectional shape of the grooves 6 is a square shape in which the floor of the grooves 6 is flat, but the cross-sectional shape of the grooves 6 is not limited to this shape; the grooves 6 may be formed in a desired shape such as an inverted triangle or trapezoid that narrows toward the floor.

The bottom edge portion of each dividing wall 7 formed in the second member 2 adheres closely to the first member 1. With this sort of configuration, the opening of each groove 6 formed in the second member 2 is sealed, and spaces are formed that become the liner reaction regions 3 that are completely isolated by the dividing walls 7 and the first member 1. Thus, dissipation of fluid outside of a reaction region 3, that is, to an adjacent reaction region 3, can be reliably prevented, and so it is possible to reliably prevent contamination of a sample between adjacent reaction regions 3.

As the substrate that constitutes the first member 1 and the second member 2, a glass plate, quartz plate, silicon wafer, or the like are given as preferred examples, but any conventionally used, publicly known material can be used. Particularly, from the viewpoints of ease of formation and optical properties, from the optical viewpoint, polydimethylsiloxane (PDMS) and poly methyl methacrylate acrylic resin, (poly methyl methacrylate, PMMA) are given as preferred examples. It is possible to form the first member 1 and the second member 2 using the same material, and it is also possible to form the first member 1 and the second member 2 using different materials. The shape, size, thickness, and the like of the first member 1 and the second member 2 are not particularly limited, but it is preferable that their shape be that of a plate-shaped body. The size of the members is appropriately set according to the number, size, shape, and the like of the reaction regions 3; a size of 26 x 76 mm can be given as an example, but is not limited to this. The thickness of the first member 1 and the second member 2 is appropriately set according to the type of substrate constituting the members, the stability of the shape demanded by the members, and the number, size, shape, and the like of the provided reaction regions 3, and is set also in consideration of the compatibility of the first member 1 and the second member 2.

PDMS is one type of silicon elastomer, and has excellent transparency and optical properties, and extremely small absorption in wide wavelength regions, particularly in visible light regions, and because it exerts almost no effect on fluorescence detection, the signal-to-noise value can be reduced by using PDMS as a biochip substrate.
Also, PDMS has the property of closely adapting to the shape of molds and is easily formed with a desired microstructure, and therefore has the advantage that the biochip can be microfabricated in a shape that is ideal for various optical equipment.
Further, PDMS has the quality of good adherence to itself, glass, acrylic resin, or the like, and by putting microfabricated PDMS substrate in contact with a member made from a flat piece of glass or acrylic resin, it is possible to form fluid channels or chambers even without using an adhering means such as adhering with an adhesive.
In this patent specification, resin material that has PDMS as its main component is referred to as PDMS substrate. In this patent specification, "main component" refers to an component that is included as 50% or more of the resin components, and preferably 70% or more, and other substances may be included as appropriate. Thus, within a range in which PDMS is the main component, it is possible to add various additives besides the above polymerization agent.

The shape of the reaction regions 3 is a linear space, and a plurality of these are formed in parallel between the first member 1 and the second member 2 in the shape of a barcode. The reaction regions 3 are configured to be used as regions for immobilizing biological molecules for a reaction that bonds biological macromolecules to a substrate of glass PDMS or the like, as fluid channels for the introduction of biological molecules to be immobilized on the substrate, samples and reaction fluid, and the dispersion of these by a capillary phenomenon.

These reaction regions are also configured to have a role as chambers when preserving immobilized biological molecules or the like, and as regions for performing hybridization, antigen-antibody response reactions, and the like.

In addition, a configuration may be adopted in which after the biological molecules in the reaction regions 3 are immobilized, one of the two members constituting the array is removed (for example, the PDMS substrate when the constituent members are glass and PDMS substrate fabricated in a linear shape), the entire region in which the biological molecules are immobilized is covered by another member that is able to cover it (for example, a PDMS substrate chamber), and hybridization, antigen-antibody response reactions, and the like are simultaneously performed in this chamber. With such a configuration, because it becomes possible to react the entire array in one reaction chamber, even without going through troublesome treatment, it is possible to allow each linearly formed reaction region 3 to make equal contact with the same sample.

The length, width, and depth of the reaction regions 3, and the intervals between reaction regions 3, are not particularly limited, but they are appropriately designed if the biological molecules, reaction fluid, samples, and the like are sufficiently and equally deployed, and good reaction fluid can be preserved for the reaction, and a space is insured in which a desired reaction can be performed. A width of 10 to 200 µm can be given as a preferable example of the width of a reaction region 3, but the width is not limited to this. A configuration such that determination information can be read by changing the width and interval of the reaction regions 3 in the manner of a barcode is also possible.

As shown in FIG. 1, it is possible to adopt a configuration that makes possible communication between the reaction regions 3 and the outside, in which sample supply openings 4 and sample recovery openings 5 are provided. The sample supply openings 4 are openings that are connected to a suitable sample supply means, and supply a sample into the reaction regions 3. The sample recovery openings 5 are openings that are connected to a suitable sample recovery means, and recover and discharge a sample out of the reaction regions 3. The sample supply openings 4 and the sample recovery openings 5, as long as they have such functions and do not impair the desired reactions in the reaction regions 3, are not particularly limited in their shape, size, set position, or the like, and can be appropriately designed. Accordingly, in FIG. 1, a configuration is disclosed in which the sample supply openings 4 are provided on one end in the lengthwise direction of the reaction regions 3 of the second member 2, and the sample recovery openings 5 are provided on the other end, but the invention is not limited to such a configuration; it is also possible to adopt a configuration in which a sample supply opening 4 and a sample recovery opening 5 are to share a single opening, or in which they are formed directly above the reaction regions 3 of the second member 2, or to the side, or in the first member 1.

A glass syringe, plastic syringe, micropipetter, fluoride ethylene resin tube or silicon tube, vinyl chloride tube, perister pump, plunger pump, syringe pump, or the like, or a combination of these, are given as preferable examples of an appropriate sample supply means and sample recovery means.. It is preferable for the material quality of these to be such that substances in a sample such as nucleic acid or protein are not non-specifically adsorbed.

Next the method for producing the barcode array of the first embodiment of the present invention will be explained. First, microfabrication is performed on the member surface, that is, groove 6 structures are formed in the face of the second member 2 that contacts the first member 1. As for the method of forming the grooves in the substrate surface, any publicly known method of microfabrication technology can be used. As methods of directly forming the grooves, examples include a method of removing the groove portion by a mechanical cutting fabrication method using a microfabrication drill and broadcloth, a method of removing the groove portion by ionizing radiation lithography such as photolithography and electron beam lithography or AFM lithography, or physical or chemical etching, or a combination of these methods. It is also possible to form grooves indirectly by transferring the space structure using a mold that has a convex structure reversed from the desired groove structure produced according to the methods described above. For example, it possible to use injection molding using a mold, or a press mold at high temperature or the like.

When PDMS substrate is used as the substrate that constitutes the member on which microstructures are executed, because PDMS closely adapts to a mold, a method that forms the member using a mold can be particularly preferably used. By using a mold, once the mold is manufactured, a large quantity of chips can be produced simply and inexpensively, and so it is possible to reduce the cost of production.

Next, the openings of the grooves 6 are sealed by adhering the first member 1 to the top edge face (convex portion) of the dividing walls 7 of the second member 2, in which microfabrication has been performed. The first member 1 and the second member 2 preferably adhere closely to each other, and thus it is possible to reliably prevent contamination of samples between reaction regions. As for the adhering method, it is possible to apply adhesive, but because PDMS substrate per se has the quality of adhering closely to a flat surface of glass, acrylic resin, or the like, when PDMS substrate is used for one of the members, if, for example, flat glass is used as the other member, adhesion is possible without adhesive if organic matter, foreign particles, and the like are removed with glass cleaner (such as Semico-clean (made by Furuuchi Chemical Corp.), or such as 0.3 N sodium hydroxide solution). Also, strong adhesion is possible by treating the surface with oxygen using a plasma etching apparatus.

Next, as a particularly preferable embodiment, a simple description of a specific procedure for producing PDMS chips using a mold method is given. Any publicly known microfabrication technology can be used for mold formation, and a preferred example is given in which a combination of photolithography technology and etching technology is utilized. Photolithography fabrication is performed by applying a photoresist (photosensitive resin) on a substrate of glass, silicon, or the like to be fabricated, and after heat treatment, the resist is exposed to light via a photo mask in which a desired fluid channel pattern is formed, and after heat treatment of the resist layer, it is developed with a predetermined developing fluid. The photoresist can be either a positive-type photoresist in which the exposed portion is developed, or a negative-type photoresist in which the unexposed portion is developed, and is uniformly applied on the substrate using a publicly known method such as spin coating, roll coating, dip coating, or the like. The developing fluid can be appropriately selected according to the type of resist. For a positive-type resist it is preferable to use a tetramethyl ammonium hydroxide aqueous solution, and for a negative-type resist it is preferable to use a liquid mixture of xylene and acetone.

Next, preferably, after the substrate has received photolithography treatment, an etching fabrication is performed on the substrate. Either wet etching performed in a medicinal solution of sulfuric acid, nitric acid, phosphoric acid, fluoric acid, or the like, or dry etching, which is represented by plasma etching in which reactive gas including trifluoromethane, tetrafluoromethane, or hexafluorethane is placed in a plasma state by electric discharge, and radicals generated at this time (reactive species) and ions are reacted with solid material and removed as the reaction product, forming a micropattern, can be used, but from the viewpoint of being able to achieve good release from the member mold that transfers the mold structure, plasma etching, which is a type of etching in which CF and CF2 radicals attach to the substrate and a protective coating is formed that creates good release from the mold, is given as a particularly preferable example.

Continuing, a mold having a concave/convex shape produced in the above manner is fixed in a mold frame, un-crosslinked PDMS is mixed with a suitable polymerization agent and flowed into the form, and by hardening, the mold structure is transferred to the PDMS. After hardening, by separating from the mold, PDMS substrate having the shape pattern of a desired structure can be produced. The hardening temperature is preferably 23°C to 150°C, hardening time is set according to the hardening temperature. Given as examples are 24 hours at 23°C, four hours at 65°C, two hours and thirty minutes at 75°C, one hour at 100°C, fifteen minutes at 150°C, and preferably, hardening is performed for two hours and thirty minutes at 75°C.

Next, by way of example, a description is given of the method of detecting a target substance using the barcode array of the first embodiment of the present invention. First, biological molecules having a substance identification function for a target substance are supported in a reaction region 3. The biological molecules are immobilized on the surface of the first member 1 and the second member 2 including the space that will be the reaction region 3. It is possible for the biological molecules to be immobilized on only the surface of either the first member 1 or the second member 2, or to be immobilized on the surface of both members. The immobilization can be performed after the first member 1 and the second member 2 are adhered, or before they are adhered, and is chosen as appropriate. When a biological substance is immobilized after the members are adhered, this is performed by injecting a sample including the biological substance from the sample injection opening.

Any publicly known method can be used for the method of immobilizing the biological molecules on the member surface, and an ideal method is appropriately selected according to the type of substance that is immobilized and the type of substrate that constitutes the members. For example, in the case that the immobilized biological molecules are nucleic acid, electrostatic coupling or covalent binding are preferably used, and in the case of protein, a covalent binding method, ion binding method, or physical adsorption method, or on the other hand, a carrier binding method such as biologically specific binding, crosslinking method, or inclusive method of enveloping with a high-molecular weight material (lattice-type or microcapsule-type) are preferably used. With respect to nucleic acid, as specific methods, a method in which nucleic acid is electrostatically coupled on a carrier surface with polycations such as poly-lysine or poly-ethylene-imine using the electrical charge of DNA, or a method in which a carrier that has been surface-processed with various types of silane coupling agents having an amino group, aldehyde group, epoxy group, or the like is covalently bound to DNA to which an amino group, aldehyde group, SH group, biotin, or the like has been introduced as a functional group at its end, can be given as preferable examples. Afterward, as necessary, treatment for cross-link formation by exposure to ultraviolet radiation and a chemical cross-linking agent, surface blocking, cleansing, and the like are performed. Here, immobilization means that the biological molecules do not lose intrinsic activity, and essentially do not detach from the substrate surface.

Next, a reaction is performed to capture the target substance. A reaction solution such as a subject sample solution on which appropriate treatment has been performed or hybridization solution, or detergent solution or the like is supplied into a reaction region 3 from a sample supply opening 4, and after a predetermined reaction, is recovered and discharged from the reaction region 3 via a sample recovery opening 5.

Also, a configuration is possible in which, with respect to the execution of hybridization, antigen-antibody response reactions, and the like, after biological molecules are immobilized in the reaction regions 3, one of the two members constituting the array is removed (for example, the PDMS substrate when the constituent members are glass and PDMS substrate fabricated in a linear shape), the entire region in which the biological molecules are immobilized is covered by another member that is able to cover it (for example, a PDMS substrate chamber), and the hybridization, antigen-antibody response reactions, and the like are simultaneously performed in this chamber. With such a configuration, because it becomes possible to react the entire array in one reaction chamber, even without going through troublesome treatment, it becomes possible to make each linearly formed reaction region 3 make equal contact with the same sample.

After the reaction, the target substance in the subject sample that interacted with the biological molecules on the microarray is, for example, detected, using a marker substance as an indicator. For the detection means, a line sensor such as a barcode reader is given as a preferable example. Because it is possible to read data with an inexpensive line sensor, it is possible to decrease detection cost. Also, when reading with a line sensor, as long as scanning is performed on the reaction regions, it is possible to read in any direction, such as a direction perpendicular or diagonal to the reaction regions, and so because strict positioning as in the case of using a microscanner is not necessary, it is possible to simplify operation.

Here, in the first embodiment of the present invention, an embodiment was described by way of example in which the grooves 6 are formed in the second member 2, but an opposite embodiment in which the grooves 6 are formed in the first member 1 is also given as a preferable example of the present embodiment.

### <Embodiment 1-2>

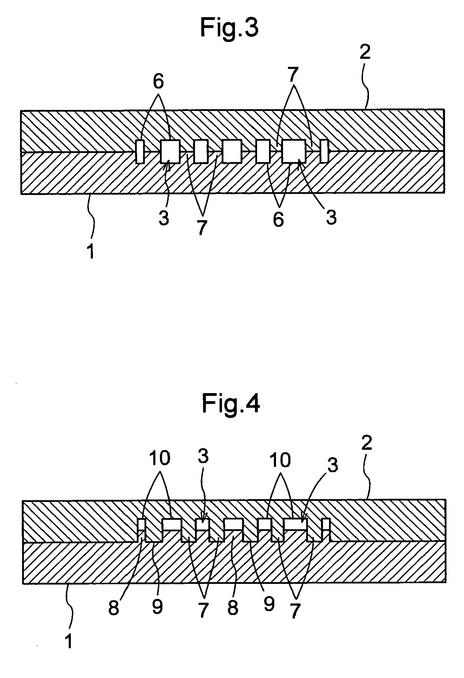

Next, the barcode array of embodiment 1-2 of the present invention is described with reference to FIG. 3. FIG. 3 is a is a cross-section taken along line A-A in FIG. 1, and shows the barcode array of the present invention when it has been configured as Embodiment 1-2. Parts of the configuration that are the same as the barcode array of Embodiment 1-1 have the same reference numerals in FIG. 3, and their explanation is omitted here.

With respect to both the first member 1 and the second member 2, surface treatment is performed on flat plate-shaped substrate, and a plurality of grooves 6 that extend in one direction are formed in parallel in a barcode shape on the surface that contacts the other member. That is, both the first member 1 and the second member 2 have a space structure in which a plurality of line-shaped grooves 6 alternate with dividing walls 7 that partition the grooves 6. The first member 1 and the second member 2 are configured so that when they have been brought into contact, the grooves 6 formed in the first member 1 and the grooves 6 formed in the second member 2 respectively face each other one-to-one.

The top edge face of each dividing wall 7 formed in the first member 1 adheres closely to the bottom edge face of each dividing wall 7 formed in the second member 2. With this sort of configuration, the opening of each groove 6 formed in the second member 2 forms a space in the first member, and a space is formed that becomes the linear reaction region 3, which is completely isolated by the dividing wall 7, the first member, and the second member.

### <Embodiment 1-3>

Next is a description of the barcode array of Embodiment 1-3 of the present invention with reference to FIG. 4. FIG. 4 is a is a cross-section taken along line A-A in FIG. 1, and schematically shows the barcode array of the present invention when it has been configured as Embodiment 1-3. Parts of the configuration that are the same as the barcode array of Embodiment 1 have the same reference numerals in FIG. 4, and their explanation is omitted here.

With respect to both the first member 1, surface treatment is performed on flat plate-shaped substrate, and a plurality of linear convex portions 8 that extend in one direction are formed in parallel in a barcode shape on the surface that contacts the second member 2. With respect to the second member 2 as well, surface treatment is performed on flat plate-shaped substrate, and a plurality of linear groove portions 10 that can be fitted one-to-one with the linear convex portions 8 are formed in parallel on the surface that contacts the first member 1. That is, the first member 1 has a space structure in which a plurality of linear convex portions 8 alternate with and are parallel to concave portions 9 that partition the linear convex portions 8 on the side of the face where the first member 1 makes contact with the second member 2. The second member 2 has, on its side contacting the first member 1, a space structure in which a plurality of linear groove portions 10 and dividing walls 7 are alternately juxtaposed with each other. The first member 1 and the second member 2 are configured so that while the linear convex portions 8 and the linear groove portions 10 are fitted together, when the members have been brought into contact, spaces are formed between the linear convex portions 8 and the linear groove portions 10 that become reaction regions 3.

Each concave portion 9 formed in the first member 1 and each dividing wall 7 formed in the second member 2 adhere by being closely fitted together. With this sort of configuration, linear spaces are formed between the linear convex portions 8 and the linear groove portions 10 that become reaction regions 3, and the spaces are completely isolated from the outside by the dividing wall 7, the first member 1, and the second member 2. In this way, in the substrate surface, different elevations are provided between the reaction regions and the regions outside the reaction regions, and by focusing detection on the surface of the reaction regions, it becomes possible to decrease the amount of background noise detected, and the signal-to-noise value can be improved.

The height, shape, and the like of the linear convex portions 8 formed in the first member 1 and the linear groove portions 10 formed in the second member 2 are set as appropriate, provided that a configuration is adopted in which while the linear convex portions 8 and the linear groove portions 10 are fitted together, when the first member 1 and the second member 2 have been brought into contact, spaces are formed between the linear convex portions 8 and the linear groove portions 10 that become the reaction regions 3. However, the height of the linear convex portions 8 is preferably 1 µm to 1 cm, and is particularly preferably 10 µm to 1 mm.

Here, as Embodiment 1-3 of the present invention, an embodiment was described by way of example in which linear convex portions 8 are formed in the first member 1, and linear groove portions 10 are formed in the second member 2, but an opposite embodiment in which the linear groove portions 10 are formed in the first member 1 and linear convex portions 8 are formed in the second member 2 is also given as a preferable example of the present embodiment.

### <Other Embodiments>

Following is a description of other embodiments in Embodiment 1.
(1) As a configuration of the biological molecule microarray of the present invention, a configuration was described in which one or both of two members in which microfabrication has been performed are adhered, and biological molecules are supported in reaction regions formed between those members. However, it is also possible to adopt a configuration configured from only one member in which microfabrication has been performed. That is, only one member is fabricated so as to have grooves such that a plurality of linear grooves are formed in parallel, and using these linear grooves as reaction regions, biological molecules are supported and a reaction is performed. As the member to be fabricated, from the viewpoints of ease of formation and optical properties, transparent silicon rubber or plastic resin such as polydimethylsiloxane or polymethylmethacrylate are given as examples.
   By configuring the microarray in this manner, it is possible to perform a reaction such as hybridization in the region of an open system as well as in the region of a closed system, and it is possible to provide a biological molecule microarray with excellent ease of formation and optical properties.
(2) Next, it is possible that one member is drill-fabricated, such that a plurality of linear holes are formed in parallel, and using these linear holes as reaction regions, biological molecules are supported and a reaction is performed. As the member to be fabricated, from the viewpoints of ease of formation and optical properties, transparent silicon rubber or plastic resin such as polydimethylsiloxane or polymethylmethacrylate are given as examples.

### <Example 1>

Following is a specific description of Embodiment 1 using examples, but the present invention is not limited to these examples.

### PDMS Chip Production

### (1) Mold Production

The surface of a silicon wafer (diameter four inches, made by Shinetsu Chemical Corp.) was washed with hydrogen peroxide sulfate (hydrogen peroxide : sulfuric acid = 1:2) and then with buffered fluoric acid, and after washing, the wafer was rinsed with distilled water and then dried. Next, a negative-type epoxy hard-film resist SU-8 (made by Micro Chem Co.) was spin coated on the wafer. The spin coating conditions are disclosed below.

### Spin Coating Conditions (one example, fluid channel height 100 µm)

After spin coating in the manner of slope 5 sec.→500 rpm 5 sec.→slope 10 sec.→2800 rpm 30 sec.→slope 5 sec., after leaving for a minimum of one hour or more, heat treatment was performed for 10 minutes at 65°C, and continuing, for 30 minutes at 95°C.

Next, a photomask that would obtain a convex portion pattern to transfer to a desired fluid channel pattern was placed on the wafer, and exposed by exposure to ultraviolet radiation for 45 seconds on an exposure apparatus (in the case of a fluid channel height of 100 µm). Here, the exposure time was adjusted to obtain a desired fluid channel height. After exposure, heat treatment was performed on the wafer for three minutes at 65°C, and next for 10 minutes at 95°C. The wafer was placed in SU-8 developing fluid (Merck Co.), and by developing the resist layer while agitating for 15 minutes, unpolymerized SU-8 was removed.

Next, the wafer was washed with 2-propanol while agitating for 10 minutes, and after then washing with distilled water the wafer was dried. After drying, the wafer surface was treated with triflouromethane (CHF₃) by a plasma etching apparatus. A mold was obtained in which convex portions reversed from a desired fluid channel structure were constructed, and that mold was used as the PDMS substrate microfabrication mold disclosed below.

### (2) Transfer From Mold

Sylgard (registered trademark) 184 (made by Dow Corning Co.) and a curing agent (made by Dow Corning Co.) were measured out and mixed in a proportion by weight of 10:1 according to the manufacturer's instructions. About 5 g was necessary to make a substrate with the dimensions 24 mm X 76 mm X 2 mm, and an appropriate amount was measured out according to the dimensions of the substrate to be formed.

Next, this mixture was deaerated in a dessicator, and after deaerating, deaerated PDMS was flowed into a mold in which the wafer had been set. By heating in a 75 °C oven for two and a half hours, the mixture was cured. By separating the cured PDMS from the mold, a PDMS chip provided with grooves was produced to which the convex portions of the mold had been transferred.

### (Effect of the Invention)

According to the barcode array of the present invention, because a sample is flowed into a reaction region formed dividedly in a linear space, it is possible to prevent interference from adjacent reaction regions, non-specific adsorption of target DNA to the substrate surface can be prevented, and high-precision detection is possible because noise can be decreased.

Further, in the substrate surface, because different elevations are provided between the reaction regions and the regions outside the reaction regions, it becomes possible to decrease the amount of background fluorescence or the like that is detected, and the signal-to-noise value can be improved.

Even without using an expensive microarray scanner, detection is possible with a multi-purpose line sensor, cost can be reduced, and because detection is possible even without precise positioning as with a microarray scanner, it is possible to achieve simplified operation.
By using PDMS, which has excellent optical properties, as the base material that constitutes the substrate, a low background can be attained, detection with a high signal-to-noise ratio is possible, and because PDMS also has excellent ease of formation, fabrication on the nano or micro order becomes easy and production in a shape that is ideal for various types of optical equipment is possible, and by adopting a molding method using a mold, production in large quantities is made possible and a further cost reduction effect can be anticipated.
Also, because this instrument can be applied to any sample by using a method suitable for various samples only for the above pretreatment, application to microorganisms included in environmental samples, genetic testing of food, genetic testing and tailor-made medical treatments in medical fields, and the like is anticipated, and so this instrument will contribute to the development of bio-instruments.

Also, with the biological molecule microarray of the present invention, reactions are possible in the region of an open system as well as in the region of a closed system.

### [Embodiment 2]

This embodiment relates to the microstructure of a biochip, and is a biological molecule biochip provided with reaction regions in which biological molecules are supported between a first member and a second member that are made to contact with each other. At least one of either the first member or the second member is configured from PDMS, and gas molecules are made to penetrate in the PDMS substrate. By making gas molecules penetrate into gaps in the network structure of the substrate, gas molecules plug gaps in the network structure and are preserved, and it is possible to modify the gas permeability possessed by the PDMS substrate itself.

The biological molecule biochip provided with reaction regions in which biological molecules are supported between a first member and a second member that are made to contact with each other means a biochip configured so that by the first member and the second member contacting each other, spaces are formed between the first member and the second member, and in those spaces biological molecules are supported as probe molecules. The spaces function as reaction regions. Here, reaction regions are regions configured to be regions that have a role as, for example, regions in which biological molecules are supported, that is, regions in which biological molecules are immobilized, and a role as fluid channels for biological molecules immobilized to the substrate, samples, injection of reaction fluid, and dispersion of these by a capillary phenomenon, and a role as regions for execution of hybridization, antigen-antibody response reactions, and the like, and as chambers when preserving immobilized biological molecules or the like. By way of preferable example, the first member and the second member are configured as a base that spots probe molecules and a cover plate, and as structural bodies that form a probe spot portion in which microfabrication has been performed.

At least one of either the first member or the second member is configured from PDMS. In other words, this means that provided that either the first member or the second member is configured from PDMS, the base material that constitutes the other member is not restricted, and may be configured from any publicly known base material. Accordingly, both members may be configured from PDMS, or the other member may be configured from a base material other than PDMS. When the other member is configured from a base material other than PDMS, material that adheres closely to PDMS, such as glass and acrylic resin, is given as a preferable example.

Making gas molecules penetrate into the PDMS substrate means that gas molecules are held in the gaps of the network structure of the PDMS substrate, that is, it indicates that gas molecules that have penetrated the substrate are suppressed from passing out from inside the substrate, and network structure gaps of the PDMS substrate are filled by gas particles. With this sort of configuration, gas cutoff of the PDMS substrate itself is improved, and airtightness of spaces that become reaction regions partly or completely surrounded by PDMS can be improved. Accordingly, water evaporation from the inside of the reaction regions can be prevented, a good reaction and preservation environment can be provided, and effects on reaction systems such as hybridization by water evaporation can be diminished. Particularly, when a configuration is adopted in which the substrate that constitutes the first and second members is substrate that adheres closely to PDMS, such as PDMS-PDMS, glass, and acrylic resin, in combination with close adherence of these members with each other, evaporation of water from the reaction regions can be held to a minimum.

As gas molecules, in the network structure of the PDMS substrate, because it is possible to hold most of the gas, provided that there is no effect on the selective response reaction of biological molecules and a target substance, any gas can be used, but from the viewpoint of ease of handling, inactive gas molecules such as nitrogen and argon and water molecules are given as preferable examples, and water molecules are particularly preferable.

Further, it is possible to perform a coating treatment on the PDMS substrate. Coating treatment is performed in order to prevent gas molecules that have been accumulated inside the PDMS substrate from dissipating from the PDMS substrate. By doing so, gas cutoff of the PDMS substrate is further increased, and the airtightness of the formed reaction spaces surrounded partly or completely by PDMS substrate is further increased. As long as the coating agent used for the coating treatment does not have an effect on the activity of the biological molecules supported in the reaction regions, any well-known coating agent can be used. Neither is the time at which coating is performed particularly limited; coating can be performed after gas molecules are made to penetrate or before. If coating treatment is performed after gas molecules are made to penetrate the PDMS substrate, some areas will be formed in which coating treatment is not performed. Or, for example, by forming holes in desired areas such that gas can penetrate inside the substrate after coating treatment is performed for all of the substrate, it is possible to preferably use this situation by making gas penetrate into the substrate from these uncoated areas.

Also, a member configured from the above treated PDMS substrate preferably receives hydrophilic treatment. Hydrophilic treatment is performed by preferably using any well-known hydrophilic surface treatment method, but particularly, preferably, hydrophilic surface treatment is performed by O² plasma treatment (for example, see Macromolecules 26, 5870 (1993)), ultraviolet ray/ozone treatment (for example, see Journal of Coloid and Interface Science 254, 306-315 (2000)), or the like. Thus, the surface of hydrophobic PDMS substrate becomes hydrophilic, and it becomes possible to coat various functional polymers abundant in carboxyl groups and amino groups such as poly-L-lysine. It is also possible to join biological molecules such as DNA and protein to these carboxyl and amino groups. Also, it is possible to deposit various colors with good effectiveness, for example, detection of target genes with visible light is possible by generating colors by reacting an enzyme substrate when using enzyme-labeled target DNA. Also, there is no particular limitation with respect to the time for performing hydrophilic treatment; it can be performed after gas molecules are made to penetrate or before.

Following is a description of the production method of the microarray of the present invention. The production method of the microarray of the present invention includes a process of keeping a substrate constituted from PDMS under vacuum conditions (below, abbreviated as "vacuum keeping process") and making molecules of a predetermined gas penetrate inside the PDMS substrate by supplying that gas in a vacuum atmosphere (below, abbreviated as "gas penetration process"). By supplying a predetermined gas in a vacuum atmosphere, the gas molecules penetrate uniformly throughout the inside of the substrate from surface holes of the network structure, and even when returned under atmospheric pressure, the gas molecules are suppressed from passing out from the inside of the substrate, and the gas molecules can be kept inside the substrate, that is, a state is maintained in which the gaps in the network structure of the PDMS substrate are filled by gas molecules.

In the vacuum keeping process, a member constituted by PDMS is housed in a sealed space, and by vacuuming the sealed space, is kept under vacuum conditions. The vacuuming of the sealed space may be performed by vacuuming from a top, bottom, or side face of the sealed space, or from a combination of a plurality of these faces. Here, vacuum conditions means a state in a space filled with gas of a lower pressure than atmospheric pressure. The degree of the vacuum is not particularly limited, and may be set appropriately taking into consideration the type of gas supplied in the gas molecule penetration process, the size of the substrate, and the like.

In the gas molecule penetration process, in a sealed space in which a vacuum atmosphere has been established, a predetermined gas is supplied, gas molecules are made to penetrate into the network structure of the PDMS substrate, and kept there. The supplied gas is not particularly limited, but from the viewpoints of ease of handling and safety, preferably, it is inactive gas such as water vapor, nitrogen gas and argon, and water vapor is particularly preferable. The gas molecules may be supplied from a top, bottom, or side face of the sealed space, or from a combination of a plurality of these faces. There is not particular limitation with respect to the temperature, pressure, and the like of the supplied gas, or with respect to exposure time or the like, and these are set appropriately taking into consideration the degree of the vacuum formed by the vacuum keeping process, the size of the member, and the like.

The timing at which the vacuum keeping process and the gas molecule penetration process are performed is not particularly limited, and if the member constituted from PDMS can be brought into contact with gas molecules under a vacuum atmosphere, after supply of gas molecules has begun, vacuuming of the sealed space may be stopped, and a configuration may also be adopted in which the supply of gas molecules and vacuuming of the sealed space are performed in parallel. Also, these treatments may be performed after the first member and the second member have been brought into contact, or the two members may be brought into contact after these treatments have been performed in advance of bringing the first and second members into contact.

Water vapor used in the case of supplying water vapor in the gas penetration process is preferably saturated water vapor or heated water vapor heated to a temperature of 100°C or above by adding heat to saturated water vapor. The temperature, pressure, exposure time, and the like of the water vapor are not particularly limited, in order to keep as much water vapor as possible in the network structure of dimethylsiloxane, high temperature is preferable, and specifically, treatment at 50°C or above is preferable, but not limited to this.

After the vacuum keeping process and the gas molecule penetration process, the interior of the sealed space is opened to the outside and returned to atmospheric pressure. Air may be immediately introduced into the sealed space after finishing the gas penetration process, returning the space to atmospheric pressure, or after finishing, air may be introduced after the sealed space is left unattended for a while. This is set as appropriate.

Following is a description of an example of an apparatus for practicing the present invention. A configuration may be adopted that includes a sealed reaction chamber that stores substrate constituted from PDMS, and provided in the reaction chamber are an inner pressure adjusting means that adjusts the inner pressure inside the reaction chamber, a gas supply means that supplies gas into the reaction chamber, and a pressure sensor that detects the pressure inside the reaction chamber. Further, it is possible to also provide a control means that controls the operation of each part. The inner pressure adjusting means can be configured to have a vacuum pump that makes the inside of the reaction chamber a vacuum atmosphere by evacuating gas from inside the reaction chamber, and an air supply pump that supplies air into the reaction chamber or a valve that opens the inside of the reaction chamber to the outside air. When the gas to be supplied is water vapor, the gas supply means can be configured as a container into which heated water is placed, a boiler in which purified water is heated by a burner and evaporated, or the like.

### <Example 1>

A test chip was produced in which PDMS substrate was attached to slide glass that had been washed with alkaline, and spaces (in the present example, configured as chambers) were formed between the PDMS substrate and the slide glass to become reaction regions able to support a sample surrounded by two members. The produced test chip was left for 20 minutes in a dessicator, in which was formed a vacuum atmosphere filled with water vapor.

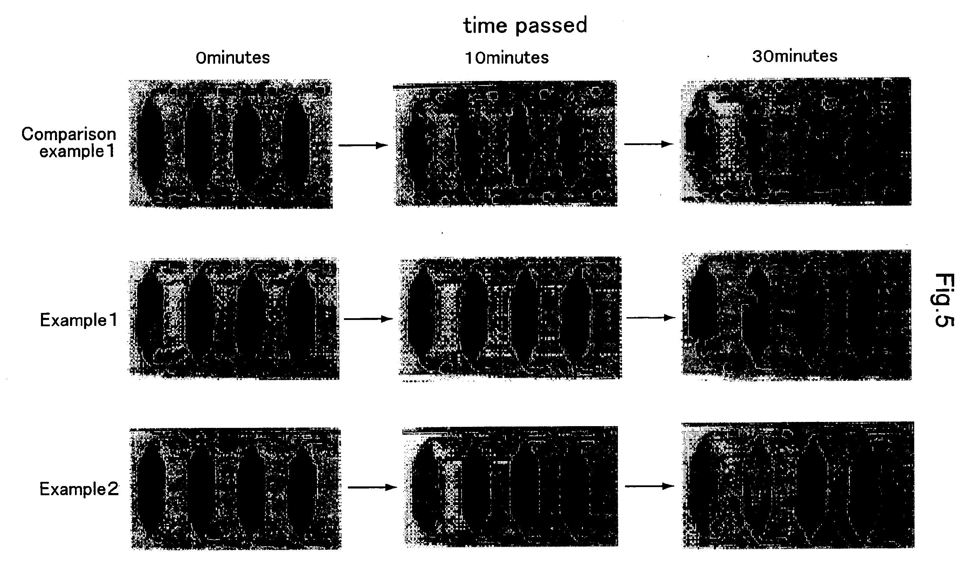

Next, after injecting 8µL of a 0.025 % bromophenol blue aqueous solution at a flow rate of 4 µL per minute using a syringe pump in the spaces formed in the test chip from small holes in communication with the spaces and the outside for supplying a sample, it was heated on a 60 °C heat block, and after heating, the test chip was photographed after 0, 10, and 30 minutes, and the change in the amount of bromophenol blue/distilled water remaining in the chambers of the test chip was observed. The results are shown in FIG. 5. From the change in the amount of bromophenol blue/distilled water that remains in the chambers of the test chip, airtightness of the chamber, that is, evaporation of water from inside the chambers, is analyzed. Also, the amount of bromophenol blue aqueous solution remaining in the chambers of the test chip was measured after passage of a predetermined amount of time, a remaining amount ratio was calculated with the injected amount (8µL) made to be a ratio of 100%, and this information was collected in Table 1.

### <Example 2>

Except for attaching a wrap to the chip surface before water vapor treatment under a vacuum, a test chip was produced in the same manner as in Example 1, and the evaporation of water from within the chambers was analyzed by the same treatment as in Example 1. The results are shown in FIG. 5 and Table 1.

### <Comparison Example 1>

Without performing water vapor treatment under a vacuum, a test chip was produced directly in the same manner as in Example 1 except for being placed on a 60 °C heat block, and the evaporation of water from within the chambers was analyzed by the same treatment as in Example 1. The results are shown in FIG. 5 and Table 1.

**Table 1**

| Chip Adjustment Method | Time Passed From Start of Heating | | |
|---|---|---|---|
| | 0 minutes | 10 minutes | 30 minutes |
| Comparison Example 1 | 100 | 80 | 50 |
| Example 1 | 100 | 95 | 80 |
| Example 2 | 100 | 100 | 100 |

| | | | |
|---|---|---|---|
| Values are proportion (%) of water remaining after passage of fixed period of time | | | |

In FIG. 5, the areas of dark color in the chambers are the areas where bromophenol blue aqueous solution is remaining. For example, in Comparison Example 1, after heating, with the passage of 0, 10, and 30 minutes, it can be seen that the color becomes progressively lighter.
As is clear from the results of FIG. 5 and Table 1, water in the chambers of the test chip, for which water vapor treatment was performed under vacuum conditions, is clearly preserved in comparison to an untreated cheap (comparison of Example 1 and Comparison Example 1). Accordingly, due to water vapor treatment under vacuum conditions the gas cutoff of the PDMS substrate itself is improved, and so it is understood that airtightness within the chambers formed by PDMS substrate is improved and the evaporation of water from inside the chambers can be prevented.
Also, it is ascertained that by coating the surface of PDMS substrate, that effect is further improved (comparison of Example 1 and Example 2).

### (Effect of the Invention)

ccording to the biological molecule microarray of the present invention, because moisture can be preserved in the microchambers that become reaction regions, high precision and highly reproducible detection is possible, and long-term preservation is possible. That is, long-term preservation in a liquid state is possible, not only DNA but also biological components such as protein and the like can be freely made compatible with biochips, and the scope of application of such biochips is far-reaching. Particularly, because it becomes possible to preserve the activity and structure of protein, which is difficult to handle, use of the present invention as a protein chip is anticipated, and the present invention makes a large contribution to the development of proteome technology.

Because detection with visible light becomes possible by performing hydrophilic treatment on the surface of PDMS substrate, detection can be performed with an inexpensive LED lamp or CCD camera, and so it is possible to achieve lower cost.

The microarray of the present invention, which has excellent properties as described above, can be anticipated to have practical applications in environmental fields, food, and medical fields, and contributes to the technological advancement of biological instruments.

### [Embodiment 3]

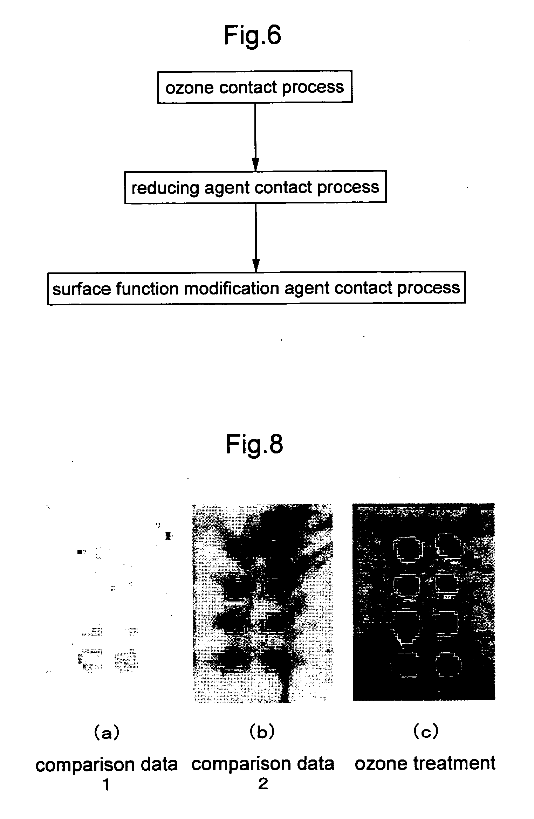

The present embodiment relates to surface modification of the biochip, and is particularly a surface modification method for silicon resin, which is a constituent material of the biochip. As shown in FIG. 6, it is characterized in that after an ozone contact process is performed in which ozone is made to contact the surface of silicon resin, a reducing agent contact process is performed in which a reducing agent is made to contact the surface of the silicon resin.

Silicon resin is an organic silicon polymer ordinarily called silicon rubber, and there are several types classified by side chains that bond to a principal chain constituted by a siloxane bond. The most common silicon resin is polydimethylsiloxane (PDMS), in which trimethylsiloxane is a terminal group. A property of polydimethylsiloxane is that various alterations are possible by substituting a methyl group bonded to a silicon atom with hydrogen, alkyl, phenyl, or an organic functional group.
This PDMS can be obtained cheaply, and because its physical properties such as transparency, optical properties, adaptability to molds, ease of fabrication, and adherence are excellent, PDMS is suitable as a raw material for biochips, in which biochemical reactions are performed. Silicon resin is not limited to PDMS.

The main component of PDMS is dimethylsiloxane, but polymerization does not occur with this alone; by adding a siloxane compound having a vinyl group or the like in a side chain, crosslinking occurs in places and a network structure is formed. When, for example, polymerizing with a polymerization agent including a vinyl group, because an unsaturated bond is formed in the molecule chain, as stated below, ozonides are easily formed by ozone that has acted on the surface of this PDMS substrate, without breaking the molecule chain. As stated above, resin base material that has PDMS as a main component is referred to as PDMS substrate.

The surface of the above silicon resin ordinarily has poor affinity with biological molecules. Thus, surface properties are modified so as to preferably perform biochemical reactions on the biochip.

First, the ozone contact process that makes ozone contact the surface of the silicon resin is performed. At this time, ozonides are easily formed by ozone that has acted on the surface of the silicon resin, which has particularly unsaturated bonds, without breaking the molecule chain. By not breaking the molecule chain, because there is no clouding caused by the occurrence of cracks in the surface of the silicon resin, the transparency of the resin is maintained. When a reducing agent contact process is performed that makes a reducer agent contact the surface of silicon resin in which ozonides are formed, unstable ozonides are effectively converted to stable hydroxyl or carboxyl groups, and modification to make the surface of the silicon resin hydrophilic can be performed. By modification to make the surface of the silicon resin hydrophilic in this manner, modification to silicon resin with high surface activity is possible. Accordingly, biological molecules and various chemical substances become easily fixed on the surface of the silicon resin.

Hydrogen peroxide is given as a preferable example of the reducing agent, but the reducing agent is not limited to this. As another reducing agent, for example, sodium sulfide can be used.

After the reducing agent contact process is performed, a surface function modification agent contact process is performed that makes a surface function modification agent contact the surface of the silicon resin.
In this process, hydroxyl or carboxyl groups produced on the surface of the silicon resin are reacted with a surface function modification agent containing amino or phenyl groups, and various functional groups such as amino or phenyl groups can be introduced to the surface of the silicon resin. Thus, it becomes possible to manufacture silicon resin that has affinity with many types of biological molecules and various chemical substances.

Various silane coupling agents are given as preferable examples of the surface function modification agent, but the surface function modification agent is not limited to this. As silane coupling agents, for example, amino silane such as 3-aminopropyltriethoxysilane can be used when amino groups are introduced, and phenyl silane such as phenyltriethoxysilane (PTES) can be used when phenyl groups are introduced. As a surface function modification agent other than a silane coupling agent, for example, poly-L-lysine can preferably be used.

### <Example>

Below is a detailed description of an example of the present invention with reference to the figures.

### (Biochip)

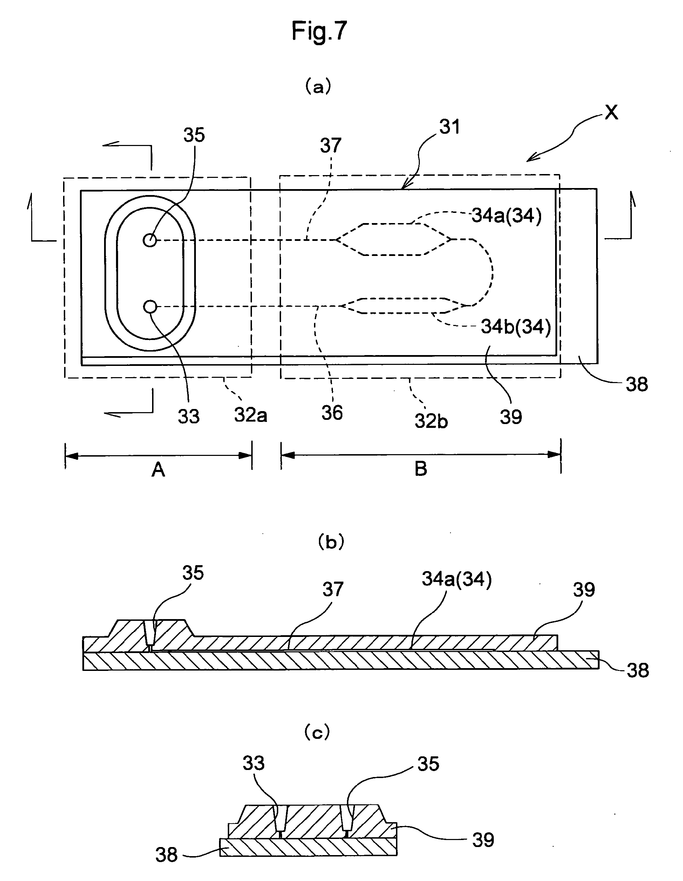

Various embodiments of the biochip, in which DNA, which is an example of a biological molecule, is fixed, can be applied.
For example, FIG. 7 shows a DNA chip 31 in which a PDMS substrate (second member) 39 formed with PDMS (Sylgard (registered trademark) 184 (made by Dow Corning Co.) as the main component is provided on a substrate 38 (first member). Other than the main component PDMS, this PDMS substrate 39 includes as components an additive and polymerization agent described below.
In this PDMS substrate 39, grooves forming microscopic capillary tube-shaped fluid channels 36 and 37, concave portions forming reaction chambers 34a and 34b as reaction regions that connect to these fluid channels, an injection hole 33 in which reaction fluid is injected, a discharge hole 35 that discharges reaction fluid (finished reaction fluid), and the like are microfabricated.
That is, between the substrate 38 and the PDMS substrate 39, by being surrounded by two members, spaces through which a sample flows (fluid channels 36 and 37) and spaces that become reaction regions in which the sample can be supported (reaction chambers 34) are formed.
A solid phase carrier or the like, such as a glass plate, can be applied as the substrate 38. Other than a glass plate, a quartz plate, silicon wafer, and the like are given as preferable examples of a solid phase carrier.

The substrate 38 and the PDMS substrate 39 in which microfabrication has been performed are made to adhere closely together. With respect to the adhering method, adhering is possible by applying an adhesive, but because PDMS has the quality of adhering closely to flat surfaces made of itself, glass, acrylic resin or the like, when PDMS substrate is used for one of the members and, for example, flat glass is used as the other member, adhesion is possible without adhesive if organic matter, foreign particles, and the like are removed with an alkaline cleaner for glass or the like.

The biochip is not limited to the configuration described above; it can also be made a DNA chip having reaction spaces disposed in parallel in a barcode shape by performing microfabrication in the PDMS substrate.
In this case, a configuration is adopted in which both the first and second members are configured as flat plate-shaped bodies, and a plurality of grooves extending in one direction are formed in parallel in a barcode shape in the face of the second member that makes contact with the first member.

When PDMS is used as the base material that constitutes a member in which a microstructure has been executed, because PDMS adapts closely to a mold, a molding method using a mold is particularly preferable. Once a mold is produced, it is possible to easily and cheaply manufacture a large quantity of chips, and so fabrication cost can be decreased. Mold formation is performed by appropriately using well known microfabrication technology, such as by combining photolithography technology and etching technology.
A mold having a concave/convex shape structure produced in the above manner is fixed in a mold frame, un-crosslinked PDMS is mixed with a suitable polymerization agent and additive and flowed into the mold, and by hardening by adding heat, the mold structure is transferred to the PDMS. At this time, the hardening time is appropriately set according to the hardening temperature. After hardening, by separating from the mold, PDMS substrate having the shape pattern of a desired structure can be produced.
In this example, methylhydrogen siloxane is used as a polymerization agent. At this time, it is preferable to mix with a ratio of about PDMS:polymerization agent =10:1.
Also, as an additive, adhesive including a methoxy group such as 3-acryloxypropyltrimethoxy silane (KBM-5103) is mixed such that it becomes 0.1 to 2% of the mixture. Thus, it can be anticipated that the immobilization effectiveness of DNA to the PDMS substrate will improve.

### (Surface Modification of PDMS Substrate)

Testing was performed in which the surface of the PDMS substrate 39 was made active.
Surface activation of the PDMS substrate 39 is, in the case of the DNA chip 31 shown in FIG. 7, at least executed for the surface of the reaction chambers 34, that is, the surface of the concave portion of the PDMS substrate 39 opposite to the substrate 38 when the substrate 38 and the PDMS substrate 39 are adhered. It is also possible to perform surface activation for the surfaces of the fluid channels 36 and 37, but when the fluid channels 36 and 37 are treated as merely fluid (reagent) pathways, it may be preferable that the affinity with biological molecules and various biochemical substances is low, and so it is not absolutely necessary to perform surface activation.

DNA fragments such as cDNA and PCR products, nucleic acids such as oligonucleotides, polynucleotides, and peptide nucleic acids, proteins, peptides, saccharides, cells, microorganisms, and the like are given as preferable examples of "biological molecules", but biological molecules are not limited to these.

Below, the treatment that activates the surface of PDMS substrate is stated in detail. The PDMS substrate used in the below testing was a flat plate-shape member in which concave portions and grooves forming fluid channels and reaction chambers were not provided.

This PDMS substrate was made to contact ozone (ozone contact process). Ozone contact with PDMS substrate was performed with ozonizer (ED-OG-R4: Ecodesign Co.) under conditions of one to three hours at discharge tube voltage 75 V, ozone concentration 0.8g/h (fluid quantity 2L/minute).
After the ozone contact process, the PDMS substrate was immersed in 30% hydrogen peroxide for 10 minutes or 24 hours (reducing agent contact process).

Afterward, the PDMS substrate was immersed for 10 minutes or 24 hours in a 50% ethanol solution including 3-aminopropyltriethoxysilane as a silane coupling agent (surface function modification agent contact process). A silane coupling agent adjusted to pH 7.0 or 4.5 was used. Testing was performed with the silane coupling agent at room temperature or heated to 75°C.

Afterward, the PDMS substrate was immersed in 100% ethanol, and by twice repeating a treatment of stirring for two minutes, a washing process was performed to wash the surface of the PDMS substrate. After washing, a drying process was performed for 15 minutes at 40 °C

In this way, substrate samples 1 to 7 were produced that were treated by variously altering the treatment time, heat conditions, and the like in the ozone contact process, reducing agent contact process, and surface function modification agent contact process.
The testing conditions when samples 1 to 7 were produced are shown in Table 2.

**(Table 2)**

| | Ozone contact process | Reducing agent contact process | Surface function modification agent contact process |
|---|---|---|---|
| 1 | 1 hour | 10 min. immersion | 10 min. immersion (pH 7.0, room temp.) |
| 2 | 1 hour | 10 min. immersion | 24 hr. immersion (pH 7.0, room temp.) |
| 3 | 1 hour | 10 min. immersion | 24 hr. immersion (pH 7.0, room temp.) |
| 4 | 1 hour | 24 hr. immersion | 10 min. immersion (pH 7.0, room temp.) |
| 5 | 1 hour | 10 min. immersion | 10 min. immersion (pH 4.5, room temp.) |
| 6 | 3 hours | 10 min. immersion | 10 min. immersion (pH 4.5, room temp.) |
| 7 | 3 hours | 10 min. immersion | 10 min. immersion(pH 4.5, 75°C) |

At this time, as an observation of the surfaces of samples 1 to 7, preservation of transparency was confirmed in all of the samples. Thus, it is thought that from the viewpoints of cost and effectiveness, it is preferable to perform the ozone contact process for about one to three hours.

### (Affinity of Surface Modified PDMS and Biological Molecules)

DNA was immobilized on the surface of the PDMS substrate 39 that had received surface modification treatment, and the strength of affinity with DNA, which is a biological molecule, was investigated.
Immobilization of DNA to PDMS substrate whose surface had been modified with the conditions of sample 1 was performed in the below manner.
A 1 pmol/µL oligo DNA solution fluorescently labeled with fluorescein isothiocyanate (FITC) in the usual method was applied (spotted) to the surface of the PDMS substrate, and by UV irradiation at 120 mJ, fluorescently labeled DNA was immobilized on the surface of the surface-modified PDMS substrate. Afterward, non-immobilized DNA was removed by washing with purified water, and the PDMS substrate was dried for 20 minutes at 40°C

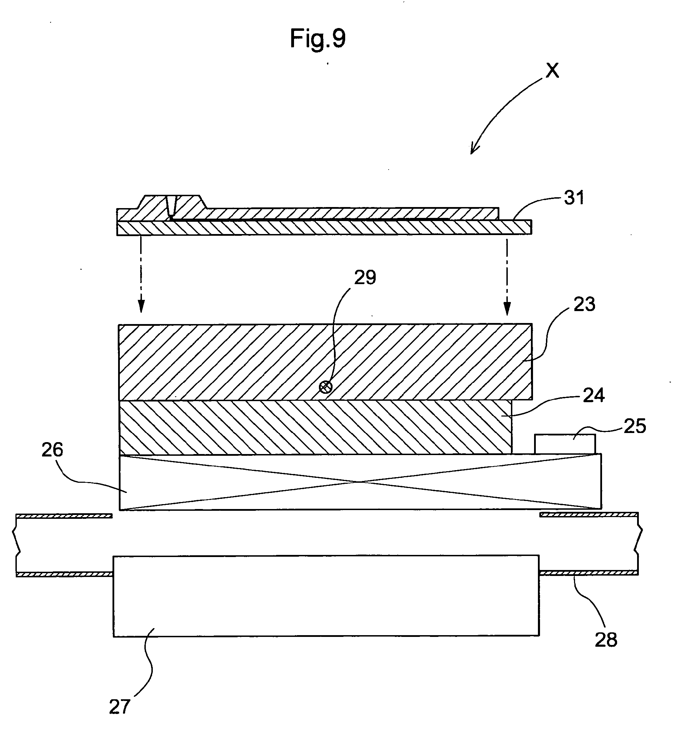

The fluorescent strength of the PDMS substrate to which fluorescently labeled DNA was immobilized in this manner was measured with a DNA microarray scanner at an absorption wavelength of 550 nm and an excitation wavelength of 570 nm, and image processing was performed. The results of image processing are shown in FIG. 8(c). The image in FIG. 8(a) is for comparison data 1, in which the ozone treatment process of the present invention is not performed, and the image in FIG. 8(b) is for comparison data 2, in which the ozone treatment process of the present invention is not performed on PDMS substrate in which the additive is mixed. In order to obtain an average value, eight points of DNA spotting (spots 1 to 8) are produced. If the spots darken after image processing, this indicates that the DNA has been effectively immobilized.

The results of measuring the concentration of DNA immobilized on the surface of the PDMS substrate (Table 3) and the evaluation of each sample by surface observation and the like are as stated below. The concentration of DNA is calculated from fluorescent strength and a standard curve (reference: DNA concentration = (fluorescent strength + 3451.9) / 134647). Fluorescent strength is a value obtained by subtracting a background from the average value of eight pieces of data. Spots 1 to 8 in Table 3 are, in each of the groups of image data in FIG. 8, spots 1 to 4 in order from top left to bottom left, and spots 5 to 8 in order from top right to bottom right.

**(Table 3)**

| Spot | Comparison data 1 | Comparison data 2 | Ozone Treatment Execution |
|---|---|---|---|
| 1 | 741 | 17776 | 99399 |
| 2 | 429 | 21663 | 53431 |
| 3 | 533 | 22038 | 99822 |
| 4 | 1277 | 24208 | 99978 |
| 5 | 386 | 24783 | 67958 |
| 6 | 519 | 25664 | 46116 |
| 7 | 662 | 31013 | 85209 |
| 8 | 1665 | 30333 | 99194 |
| Background | 259 | 1558 | 4123 |
| Fluorescent strength | 518 | 23126 | 77265 |
| DNA concentration (pmol) | 0.03 | 0.20 | 0.60 |

In comparison data 1 (FIG. 8(a)), in which an additive is not mixed in the PDMS substrate and ozone treatment is not performed, it is clear that for the most part DNA can not be immobilized. In comparison data 2 (FIG. 8(b)), in which an additive is mixed in the PDMS substrate, slight DNA bonding ability is seen. On the other hand, in the data (FIG. 8(c)) in which the method of the present invention is applied, in which an additive is mixed in, and ozone treatment is performed, because dark spots are detected, it is confirmed that DNA is immobilized with high effectiveness. In any case, the transparency of the PDMS substrate is not impaired.

From the above, it was confirmed that by performing the ozone treatment process of the present invention, the affinity of PDMS substrate with DNA improves, and because modification is made such that the immobilizing ability of DNA improves, it is possible to provide substrate raw material for a biochip with which analysis can be preferably performed.

### <Other Embodiments>

In the example described above, silicon resin was disclosed by way of example in which PDMS was a main component, but the present invention is not limited to this. For example, the present invention can also be practiced with poly methyl methacrylate (PMMA) acrylic resin.

### [Embodiment 4]

The present embodiment relates to biochip temperature control, and particularly, a biochip reaction temperature controller that controls the temperature of the biochip will be described in detail.

A microreactor is a microanalysis device in which, for example, a sample injection hole, sample discharge hole, microscopic capillary tube-shaped fluid channels, and reaction chambers as reaction regions that connect to these fluid channels, are formed in a substrate. The microreactor is used as a DNA analysis device, microeletrophoresis device, microchromatography device, microsensor, or the like. In this example, as one example of a biochip, a DNA chip is disclosed by way of example that is one type of DNA analysis device.

A DNA ship is disclosed by way of example in which a DNA probe for hybridizing with a target nucleic acid in a specimen is immobilized on the substrate, but the present invention is not limited to this.
That is, the biochip reaction temperature controller of the present invention can be applied as a temperature control apparatus that controls the temperature of the DNA chip.

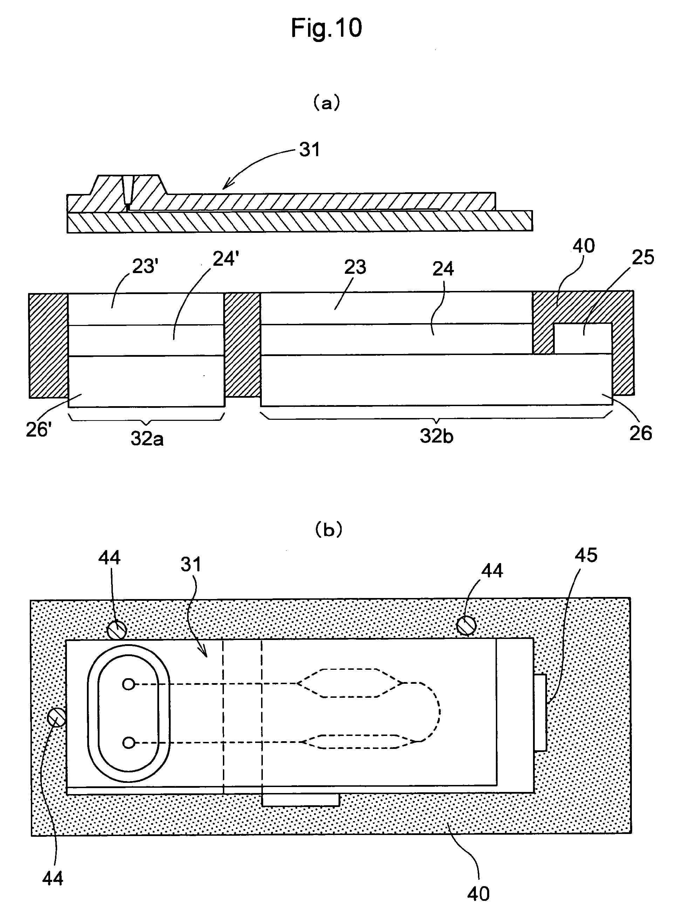

As shown in FIGS. 9 and 10, a biochip reaction temperature controller X is configured with a heat transfer block 23, on which a DNA chip (microreactor) 31 that is the target of temperature control is placed, a Peltier element 24 that makes contact with the heat transfer block 23, and a heating /heat absorbing means 26 that makes contact with the Peltier element 24, disposed in order.

Also the biochip reaction temperature controller X is configured with a heater 25 that makes contact with the heating / heat absorbing means 26.
In FIG. 9, a configuration is shown that includes a cooling fan 27 and an exhaust duct 28. On the other hand, FIG. 10 shows a schematic view of essential parts in the case of a configuration in which, when configuring a first predetermined portion A so that it can cool and a second predetermined portion B such that it can heat or cool, a plurality of temperature control portions are provided, and the first predetermined portion A and the second predetermined portion B are respectively provided on individual temperature control portions 32a and 32b.

In this example, the plate-shaped Peltier element 24 is configured in a plate-like shape in which a thermoelectric semiconductor chip made with bismuth material is sandwiched between electrodes configured by copper soldered plating, for example. The plate-shaped Peltier element 24 formed in this way is configured such that it can transmit electricity.

The heating / heat absorbing means 26 can be configured so that it can heat the Peltier element 24 , which is the target of heating or heat absorption, or can absorb heat from the Peltier element 24, and it is configured from, for example, graphite or the like, which excellent lateral conduction. Thus, the heat transfer / heat absorbing means 26, which makes contact with a heater 25, can heat the Peltier element 24 by effectively transferring heat from the heater 25 to the Peltier element 24. When the heater 25 is not driven, the heat held by the Peltier element 24 can be absorbed via the heating / heat absorbing means 26 by, for example, releasing heat to the side of the exhaust duct 28. As a result, it is possible to swiftly drop the temperature of the Peltier element 24.

A ceramic heater (heat capacity 100 to 150 W) or the like can be used for the heater 25. A thermocouple 29 is embedded in the heat transfer block 23.

In the DNA chip 31, as shown in FIG. 7, provided on a substrate 38 are an injection hole 33 into which reaction fluid including a target nucleic acid in a specimen is injected, reaction regions 34 in which a DNA probe and the target nucleic acid in the specimen are hybridized, a discharge hole 35 from which reaction fluid (finished reaction fluid) is discharged after hybridization, a first fluid channel 36 that allows communication between the injection hole 33 and the reaction regions 34, and a second fluid channel 37 that allows communication between the reaction regions 34 and the discharge hole 35.

Amplified nucleic acid or the like included in PCR amplification reaction fluid is applicable as the target nucleic acid in the specimen, but the present invention is not limited to this.

A solid phase carrier such as a glass plate or the like can be applied as the substrate 38. Other than a glass plate, a quartz plate, silicon wafer and the like are given as preferable examples of a solid phase carrier.
It is preferable that a configuration is adopted in which dividing is possible with an elastic member 39, in which the injection hole 33, the first fluid channel 36, the reaction regions 34, the second fluid channel 37, and the discharge hole 35 can be microfabricated.
From the viewpoints of ease of molding and optical properties, polydimethylsiloxane (PDMS) or the like, for example, can be applied in the elastic member 39.
As stated above, because PDMS has excellent transparency and optical properties, and extremely low absorption in visible light regions, and has almost no effect on detection of fluorescence, the signal-to-noise ratio can be lowered by using PDMS as the biochip substrate. Further, it has the properties of excellent adaptability to molds and easy microfabrication.

Further, PDMS has the quality of adhering closely to itself, glass, acrylic resin, or the like, and by bringing a flat member made of glass or acrylic resin into contact with the PDMS substrate in which microfabrication has been performed, it is possible to form fluid channels and chambers even without using an adhering means such as adhering with an adhesive.
That is, when adopting a configuration like the present configuration, in which dividing is possible with the elastic member 39 (PDMS), in which microfabrication of the injection hole 33, the first fluid channel 36, the reaction regions 34, the second fluid channel 37, and the discharge hole 35 from the nano to micron orders is possible, the DNA chip 31 can be effectively produced because the injection hole 33, the first fluid channel 36, the reaction regions 34, the second fluid channel 37, and the discharge hole 35 can be easily constructed.

Ordinarily, in the Peltier element 24, a p-type semiconductor and an n-type semiconductor are thermally arranged in parallel, and by connecting them in series electrically and applying electricity, a heat releasing face and a heat absorbing face are created. Thus, it is possible to configure the heat transfer block 23 that is in contact with the Peltier element 24 such that it is heated by normal driving of the Peltier element 24, or cooled by reverse driving of the Peltier element 24.

When adopting such a configuration, when normally driving the Peltier element 24, because the side of the Peltier element 24 that releases heat and the heat transfer block 23 make contact, it is possible to heat the DNA chip 31 via the heat transfer block 23. At this time, if the ceramic heater 25 is driven, the heating /heat absorbing means 26 effectively transfers heat from the ceramic heater 25 to the Peltier element 24, and it is possible to heat the Peltier element 24, so the temperature of the Peltier element 24 can be quickly raised.

Here, with respect to the temperature of the Peltier element 24 and the DNA chip 31, which is the target of temperature control, an example is given of a case in which the biochip reaction temperature controller X is driven at room temperature.

Before driving, such as when power is turned off, the biochip reaction temperature controller X (Peltier element 24) has about the same temperature as room temperature. Assume that, for example, the temperature is raised to 94°C immediately after driving. At this time, the difference between the temperature of the biochip reaction temperature controller X (Peltier element 24) and the desired temperature of the DNA chip 31 is the temperature difference from room temperature to 94°C. That is, it is necessary to raise the temperature from room temperature to 94°C with the biochip reaction temperature controller X.

Here, heat is generated by applying a suitable current to the Peltier element 24, and when heating the Peltier element 24 via the heating / heat absorbing means 26 by causing the ceramic heater 25 to generate heat, the difference between the temperature of the Peltier element 24 and the desired temperature of the DNA chip 31 (94°C) can be reduced more quickly than in the case of the Peltier element 24 alone. Thus, the heating efficiency when heating the DNA chip 31 improves.

The heating temperature of the ceramic heater 25 can be appropriately set such that the heat properties of the Peltier element 24 are efficiently exhibited.

Accordingly, when the biochip reaction temperature controller X of the present invention is applied, because it is possible to raise the temperature of the DNA chip 31 more quickly than in the case of the Peltier element 24 alone, it is possible to drastically reduce the treatment time of various processes.

When the Peltier element 24 is driven in reverse, because the side of the Peltier element 24 that absorbs heat and the heat transfer block 23 make contact, it is possible to cool the DNA chip 31 via the heat transfer block 23. At this time, if driving of the ceramic heater 25 is stopped, the heat held by the Peltier element 24 can be absorbed via the heating / heat absorbing means 26 by, for example, releasing heat to the side of the exhaust duct 28. As a result, it is possible to quickly lower the temperature of the Peltier element. At this time, it is possible to anticipate an improvement in the heat-releasing effect by using the cooling fan 27.

It is preferable that the material and the dimensions of the Peltier element 24, the heat transfer block 23, and the heating / heat absorbing means 26 are appropriately set such that the heating properties of the Peltier element 24 can be effectively exhibited.

As shown in FIG. 7, the DNA chip 31 described above can be configured so that a region that includes at least part of the first fluid channel 36 and part of the second fluid channel 37 is made the first predetermined portion A, and a region that includes at least the reaction regions 34 is made the second predetermined position B, and the first predetermined portion A can cool, and the second predetermined portion B can heat or cool.

For example, the first predetermined portion A is made a region that includes the area from the injection hole 33 to the midst of the first fluid channel 36, and from the midst of the second fluid channel 37 to the discharge hole 35, and the second predetermined portion B is made a region that includes the reaction regions 34. Here, as shown in FIG. 7, it is possible to make the reaction regions 34 two reaction chambers (first chamber 34a and second chamber 34b). At this time, for example, the respective chambers are made to have separate functions. For example, hybridization is performed in the first chamber 34a, and in the second chamber 34b, reagent solution is temporarily accumulated, or temporarily accumulated reagent solution is stirred.

As shown in FIGS. 7 and 10, the first predetermined portion A and the second predetermined portion B are configured such that they are respectively provided on individual temperature control portions 32a and 32b. For example, they are configured so that the first predetermined portion A controls the temperature in the temperature control portion 32a (heat transfer block 23', Peltier element 24', heating / heat absorbing means 26'), and the second predetermined portion B (heat transfer block 23, Peltier element 24, ceramic heater 25, heating / heat absorbing means 26) controls the temperature in the temperature control portion 32b (see FIG. 10). In the temperature control portion 32a, it is possible to supplement the ceramic heater 25 as necessary. A configuration may also be adopted in which the first predetermined portion A and the second predetermined portion B are respectively configured by the heat transfer block and the Peltier element.
It is preferable that an insulating material 40 for preventing the first predetermined portion A and the second predetermined portion B from receiving an effect from each other's temperature control, and a position pin 44 and a holder 45, are provided in order to accurately position the predetermined portion A and the second predetermined portion B respectively on the temperature control portions 32a and 32b.

Because the second predetermined portion B is made able to heat or cool, in the second predetermined position B, which includes the reaction regions 34, it is possible to set a temperature for performing hybridization and subsequent washing.

Because it is possible to cool the first predetermined portion A, which includes a part of the first fluid channel 36 and the second fluid channel 37, for example, water vapor generated from a reagent or the like due to heating the reaction regions 34 becomes likely to condensate in the first fluid channel 36 or the second fluid channel 37. Thus, a reagent or the like present in the reaction regions 34 is not likely to evaporate outside the DNA chip 31 and dissipate.

Accordingly, it becomes difficult for the sample in the reaction region 34 to be reduced, and testing that handles very small amounts of a sample on the DNA chip 31 can be reliably performed.

A configuration can also be adopted in which a plurality of the first predetermined portion A and the second predetermined portion B are respectively provided on one DNA chip 31.

### Industrial Applicability

The biochip of present invention can be used for determining information regarding nucleic acid sequences, and analysis of expression, variation, diversity, and the like of genes, and refinement and identification of target proteins and functional analysis of protein expression, interaction, posttranslational modification, and the like.

### Brief Description of Drawings

[FIG.1] FIG. 1 is a schematic diagram that shows the basic configuration of the present invention, and is a top view of a barcode array of the present invention.
[FIG. 2] FIG. 2 is a pattern diagram that shows a barcode array of the present invention when configured as a first embodiment, and is a cross-sectional view along line A-A in FIG. 1.
[FIG. 3] FIG. 3 is a pattern diagram that shows a barcode array of the present invention when configured as a second embodiment, and is a cross-sectional view along line A-A in FIG. 1.
[FIG. 4] FIG. 4 is a pattern diagram that shows a barcode array of the present invention when configured as a third embodiment, and is a cross-sectional view along line A-A in FIG. 1.
[FIG. 5] FIG. 5 is an illustration that shows the results of testing in which the fluid retention of test chips produced in Example 1, Example 2, and Comparison Example 1 was compared.
[FIG. 6] FIG. 6 shows the processes of a silicon resin surface modification method of the present invention.
[FIG. 7] FIG. 7 shows an example of a biochip.
[FIG. 8] FIG. 8 shows the results of fixing fluorescently marked DNA to the surface of PDMS substrate, and measuring the fluorescent strength.
[FIG. 9] FIG. 9 is a schematic view of a biochip reaction temperature controller of the present invention.
[FIG. 10] is a schematic view of a biochip reaction temperature controller provided with a plurality of temperature control portions.

### DESCRIPTION OF REFERENCE NUMERALS

- 1: first member
- 2: second member

## Claims

1. A biological molecule biochip that supports biological molecules between a first member and a second member, wherein
in either the first member or the second member, by forming a plurality of grooves in parallel in a face that makes contact with the other member, a plurality of spaces are provided that become reaction regions.

2. A biological molecule biochip that supports biological molecules between a first member and a second member, wherein
by forming a plurality of grooves in parallel in faces of the first member and the second member where the two members contact each other, a plurality of spaces are provided that become reaction regions.

3. A biological molecule biochip that supports biological molecules between a first member and a second member, wherein
in the first member, a plurality of linear convex portions are formed in parallel in a face that contacts the second member, and in the second member, a plurality of linear groove portions are formed in parallel in a face that contacts the first member that can fit together one-to-one with the linear convex portions, and
while the linear convex portions and the linear groove portions are fitted together, when the first member and the second member are made to contact each other, spaces that become reaction regions are formed between the linear convex portions and the linear groove portions.

4. The biological molecule biochip according to any of claims 1 to 3, wherein a sample supply opening that supplies a sample to the reaction regions and a sample recovery opening that recovers the sample from the reaction region are provided, making possible communication between the reaction regions and the outside.

5. The biological molecule biochip according to any of claims 1 to 3, wherein a substrate that constitutes at least either one of the first member and the second member is transparent silicon rubber or plastic resin such as polydimethylsiloxane or poly methyl methacrylate.

6. A biological molecule biochip that supports biological molecules, having a biochip main body in which a plurality of linear reaction regions are provided in parallel.

7. The biological molecule biochip according to claim 6, wherein a substrate that constitutes the biochip main body is transparent silicon rubber or plastic resin such as polydimethylsiloxane or poly methyl methacrylate.

8. A biological molecule biochip provided with a reaction region that supports biological molecules between a first member and a second member that are put in contact, wherein at least either one of the first member and the second member is comprised of polydimethylsiloxane, and gas molecules are made to penetrate into the polydimethylsiloxane substrate.

9. The biological molecule biochip according to claim 8, wherein coating is performed on the surface of the member comprised of polydimethylsiloxane.

10. The biological molecule biochip according to claim 9, wherein the coating is a gas impermeable polymer.

11. A method for producing a biological molecule biochip in which at least either one of a first member and a second member that are put in contact with each other is comprised of polydimethylsiloxane, and molecules are supported in a reaction region formed between the first member and the second member, the method comprising a step of maintaining the member comprised of polydimethylsiloxane under vacuum conditions, and a step of making molecules of a predetermined gas penetrate into the polydimethylsiloxane substrate by supplying the gas into the vacuum atmosphere.

12. A silicon resin surface modification method wherein, after performing an ozone contact process in which ozone is made to contact the surface of a silicon resin, a reducing agent contact process is performed in which a reducing agent is made to contact the surface of the silicon resin.

13. The silicon resin surface modification method according to claim 12, wherein after performing the reducing agent contact process, a surface function modification agent contact process is performed in which a surface function modification agent is made to contact the surface of the silicon resin.

14. The silicon resin surface modification method according to claim 13, wherein the silicon resin has polydimethylsiloxane (PDMS) as a main component.

15. The silicon resin surface modification method according to any of claims 12 to 14, wherein the reducing agent is hydrogen peroxide.

16. The silicon resin surface modification method according to claim 13 or 14, wherein the surface function modification agent is a silane coupling agent.

17. The silicon resin surface modification method according to any of claims 12 to 14, wherein in the ozone contact process, the resin surface is treated with ozone for one to three hours at 0.8 g/h or more.

18. A biochip reaction temperature controller provided with a temperature control portion that controls the temperature of a biochip provided with a fluid channel and a reaction region connected to the fluid channel, wherein
the temperature control portion is provided with a heat transfer block on which the biochip is placed, a Peltier element that makes contact with the heat transfer block, and a heating / heat adsorbing means that makes contact with the Peltier element, disposed in order.

19. The biochip reaction temperature controller according to claim 18, wherein a heater is provided that makes contact with the heating / heat adsorbing means.

20. A biochip reaction temperature controller provided with a temperature control portion that controls the temperature of a biochip provided with a reaction region, wherein
when the biochip is configured with an injection hole in which a reaction fluid is injected, a reaction region in which the reaction fluid is reacted, a discharge hole that discharges the reaction fluid, a first fluid channel that allows communication between the injection hole and the reaction region, and a second fluid channel that allows communication between the reaction region and the discharge hole, provided on a substrate,
by providing a plurality of temperature control portions, a region that includes at least part of the first fluid channel and part of the second fluid channel is configured so as to be able to cool, and a region that includes at least the reaction region is configured so as to be able to heat or cool.
